# EUROPEAN PATENT SPECIFICATION

(11) **EP 4 660 900 B1**
(45) Date of publication and mention of the grant of the patent: **12.08.2026**
(21) Application number: 24180715.5
(22) Date of filing: 07.06.2024
(51) Int. Cl.: G06N 10/70, G06N 10/80

(54) **COMPUTING METHOD AND SYSTEM FOR MEASURING MITIGATED OUTPUTS OF NOISY QUANTUM HARDWARE**
BERECHNUNGSVERFAHREN UND SYSTEM ZUR MESSUNG VERRINGERTER AUSGABEN VON VERRAUSCHTER QUANTENHARDWARE
PROCÉDÉ ET SYSTÈME DE CALCUL POUR MESURER DES SORTIES ATTÉNUÉES D'UN MATÉRIEL QUANTIQUE BRUYANT

(43) Date of publication of application: 10.12.2025
(73) Proprietor: Commissariat à l'Energie Atomique et aux Energies Alternatives, 75015 Paris (FR)
(72) Inventor: BLUNDEN-CODD, ZACHARY, 91191 Gif-sur-Yvette Cedex (FR); TAMAAZOUSTI, MOHAMED, 91191 Gif-sur-Yvette Cedex (FR); HERRERA-MARTI, DAVID, 91191 Gif-sur-Yvette Cedex (FR)
(74) Representative: Santarelli

(56) References cited:
- WALLMAN JOEL J. ET AL: "Noise tailoring for scalable quantum computation via randomized compiling", vol. 94, no. 5, 1 November 2016 (2016-11-01), pages 52325, XP055982922, ISSN: 2469-9926, Retrieved from the Internet <URL:https://journals.aps.org/pra/pdf/10.1103/PhysRevA.94.052325> DOI: 10.1103/PhysRevA.94.052325
- LUKAS HANTZKO ET AL: "Tensorized Pauli decomposition algorithm", ARXIV.ORG, CORNELL UNIVERSITY LIBRARY, 201 OLIN LIBRARY CORNELL UNIVERSITY ITHACA, NY 14853, 21 November 2023 (2023-11-21), XP091658987

## Description

### FIELD OF THE INVENTION

The present invention relates to the field of quantum computing. More particularly, it relates to a computing system and a computing method for measuring a mitigated output of a noisy quantum circuit.

### BACKGROUND OF THE INVENTION

Quantum computers use quantum phenomena such as superposition and entanglement to perform computations. By precisely controlling these phenomena, it is, in principle, possible for quantum computers to outperform their classical counterparts for some tasks. Quantum computers have myriad potential applications, including chemical modelling, encryption, and optimising search algorithms.

Quantum computing is based on the manipulation of quantum bits, or "qubits", which can be thought of as a superposition of the 1 and 0 states of a quantum physical variable.

A qubit is the basic unit of quantum information, it can be present as a single qubit quantum state |*Ψ*〉₁ which corresponds to a superposition |*Ψ*〉₁ = *α*|0〉 + *β*|1〉 of the basis states |0〉 and |1〉, where *α* and *β* are complex numbers that satisfy the normalisation constraint, |*α*|² + |*β*|² = 1. The quantum state |*Ψ*〉₁ is a vector in a complex linear vector space (a Hilbert space). The set {|0〉, |1〉} is an orthogonal basis of the vector space, called the computational basis (also known as the Z-basis). This basis is not unique. For example, another important basis is the phase basis (also known as the X-basis).

The basis states can be extended to *N*_{Q} qubits, where *N*_{Q} > 1, by a tensor product. For a binary vector *u* = (*u*₁, ..., *u_{N_{Q}}*) E {0,1}^{*N*^{Q}}, let |u〉 = |( (*u*₁, ..., *u*_{*N*_{Q}})〉 : = |*u*₁〉 ⊗ ... ⊗ |*u_{N_{Q}}*〉. The set {|*u*〉|*u* E {0,1}^{*N*_{Q}}} is the computational basis on *N*_{Q} qubits. Any *N*_{Q} qubit quantum state (|*ψ*〉_{*N*_{Q}}) can be written as a superposition of the *N*_{Q} qubit computational basis states, which are tensor products of *N*_{Q} single qubit basis states, but |*ψ*〉_{*N*_{Q}} is not necessarily a tensor product of *N*_{Q} single qubit states.

Quantum computation is carried out by applying quantum gates on qubits. Some examples of these quantum gates are Pauli, Hadamard, T, and CNOT gates.

Pauli gates are a set of four quantum gates, denoted by I, X, Y, Z, which act on a single qubit. Note that Y = iXZ, and X² = Y² = Z² = I, where I is the identity operator. Pauli X acts like a NOT gate in the computational basis and Pauli Z acts like a NOT gate in the phase basis.

Pauli gates are extended to act on *N*_{Q} qubits by a tensor product. Tensor products of, any number of, Pauli gates are known as Pauli Word Operators (P*ᵢ*): ${P}_{i} = {⊗}_{n = 1}^{{N}_{Q}} {σ}_{\left[n\right] , \left⌊\frac{i}{{4}^{n - 1}}\right⌋ mod 4 ,}$ where *N*_{Q} is the number of qubits that the Pauli Word acts on, *σ*_{[*n*]*,j*} is the jth single qubit Pauli operator for the nth qubit *σ*_{[*n*]*,*0} = I, *σ*_{[*n*]*,*1} = X, *σ*_{[*n*]*,*2} = Y, and *σ*_{[*n*]*,*3} = Z). $\left⌊\frac{i}{{4}^{n - 1}}\right⌋$ is the integer part of the division of *i* by 4^{*n*-1} and *k* mod 4 is the remainder after dividing *k* by 4. For example, P₇ = X ⊗ Z is a Pauli (Word) operator on two qubits.

Although there are different technologies for implementing quantum computers, they all share the same shortcoming, namely that the qubits and gates are affected by noise, which prevent quantum devices from producing useful results. While bits in classical computers are physically materialised by the on/off states of transistor switches with high error tolerances, there is no such certainty for qubits. Indeed, the fragile superposition of states of a qubit can easily be disturbed by its environment and collapse, resulting in a loss of information. Quantum computers therefore require some procedure to suppress the noise at a physical and/or logical level, an example of a noise suppression technique is error mitigation, another example is error correction. Note that error correction checks for and corrects errors as they occur in a computation whereas error mitigation corrects for the average effect of an error over many runs of a computation. Error correction strategies generally require a qubit overhead, using many physical qubits to encode one logical qubit. Error mitigation usually has a sampling overhead and a circuit length overhead, meaning that a mitigated experiment must be run/sampled more times than an unmitigated one to obtain results with the same precision and the circuits will generally be longer and thus take longer to execute.

Error mitigation uses a combination of circuit manipulation and post-processing with a (classical) computer to suppress the effects of errors in quantum devices. The quality, or fidelity, of results from Noisy Intermediate Scale Quantum (NISQ) devices decays exponentially as a function of the average number of faults in a circuit, which is the product of the probability of error per gate and the number of gates in the circuit, if every gate has the same error probability. High-precision quantum devices, or those requiring large circuits, require very low per-gate error levels. Error mitigation is intended to suppress noise in existing NISQ devices and to complement quantum error correction in fault tolerant quantum computers.

The linear error mitigation method to mitigate measurements of the observable *Ô* is given by: ${\left〈{O}^{˜}\right〉}_{M} = {\sum }_{i = 0}^{{N}_{C}} {c}_{i} {\left〈{O}^{˜}\right〉}_{i} \approx \left〈\hat{O}\right〉 ,$ where 〈*Ô*〉_{M} is the mitigated observable, *cᵢ* is the ith mitigation coefficient, 〈*Õ*〉*ᵢ* is the ith observable measurement (i.e. the outcome of the ith circuit used in the mitigation), and 〈*Ô*〉 is the noise-free observable expectation and *N_{C}* is the number of extra circuits required for the mitigation. Mitigation methods are characterised by their residual bias (the error remaining after mitigation), their sampling cost, e.g.: ${C}_{S} = {\sum }_{i = 0}^{{N}_{C}} \left|{c}_{i}\right| ,$ for linear mitigation methods, and the relative increase in the circuit duration, e.g.: ${F}_{S} = {\sum }_{i = 0}^{{N}_{C}} \frac{\left|{c}_{i}\right|}{{C}_{S}} \frac{{τ}_{i}}{τ} ,$ for linear mitigation methods, where *τ* is the runtime of the unmitigated circuit and *τᵢ* is the runtime of the ith circuit used for the mitigation. The sampling cost is the square root of the ratio of the number of samples required in the mitigated case to the number of samples required in the unmitigated case, to obtain results of the same precision, e.g. for linear mitigation we require: $N = {\left(\frac{{C}_{S}}{σ}\right)}^{2} ,$ runs of the experiment to obtain a mitigated observable estimate, where *σ* is the target precision (i.e. standard deviation).

The increase in circuit duration is due to the number of additional gates that must be added to the circuit for the mitigation.

For later convenience we introduce the concept of channels and transfer matrices. A quantum channel (C) can be defined by its action on a quantum density matrix (*ρ*), where: $ρ = {\sum }_{i = 1}^{K} {a}_{i} {\left|ψ\right〉}_{i} \left〈ψ\right| ,$ where K is the number of components of the density matrix, to transform it to a new state. All the noisy gates (e.g. *Ũ*) are not true gates but are quantum channels and we also have a quantum channel representation of a noise free gate (U):

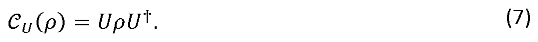

Where 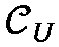 is the quantum channel corresponding to *U.* A noisy gate (*Ũ*) is the composition of a noise free channel (*C_{U}*) and a noise channel (*ε*) so we can represent the noise channel that corresponds to *Ũ* by: 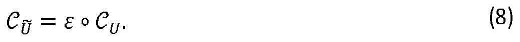 which corresponds to applying the noise free gate (U) followed by the noise channel (*ε*). In order to have more convenient notation to work with we define the element in the ith row and jth column of the transfer matrix corresponding to the channel C by: 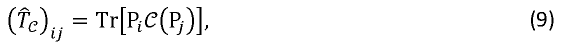 where *T̂_{C}* is the transfer matrix corresponding to channel C and P*ᵢ* and P*ⱼ* are the ith and jth Pauli Word Operator respectively (see Eq. (1)).

This means the transfer matrix corresponding to the noisy gate (*Ũ*) is given by: ${\hat{T}}_{{U}^{˜}} = {\hat{T}}_{ε} {\hat{T}}_{U} ,$ where *T̂_{Ũ}* is the transfer matrix corresponding to the noisy gate *Ũ, T̂_{ε}* is the transfer matrix corresponding to the error channel *ε, T̂_{U}* is the transfer matrix corresponding to the noise-free (component of the noisy) gate U.

One technique for error mitigation is Probabilistic Error Cancellation, which decomposes each noise-free gate as a linear combination of noisy gates. An example is described in Piveteau et al. "Quasiprobability decompositions with reduced sampling overhead": npj Quantum Information, volume 8, Article number: 12 (2022). This is an implementation of Probabilistic Error Cancellation where one can implement a trade-off between the residual bias and the sampling cost by optimising the coefficients for the linear combination. It implements an approximate decomposition of each gate into a linear combination of noisy gates. The document also provides a Stinespring algorithm to obtain the decomposition parameters for a given gate, with a known noise channel. The Stinespring algorithm requires a smaller basis set than the standard basis. However, it is heuristic with no guarantee of optimality. Furthermore, approximate Probabilistic Error Cancellation can leave a residual bias, which will limit the circuit sizes one can implement. In addition, it has a basis set of 70-80 elements and if any of these elements were changed (e.g. if one produces a less noisy implementation of one of these gates that one wishes to make use of) one would presumably have to re-run the optimisation for some or all the mitigated gates.

Another example is described in Berg et al. "Probabilistic error cancellation with sparse Pauli-Lindblad models on noisy quantum processors" Nature Physics (2023). It provides an implementation of Probabilistic Error Cancellation that uses only Pauli words for the decomposition gate set. This significantly simplifies the problem and can be used for Pauli noise. It is mentioned that this approach could be used with Pauli Twirling in order to ensure the noise model is Pauli. It includes a strategy for learning the noise model as the composition of a set of single Pauli word channels. The approach is designed to mitigate error channels acting on large numbers of qubits (e.g. due to gate cross-talk) by approximating the full channel by a channel including the most significant Pauli Words. This strategy does not account for errors induced by the Twirling and mitigation operators.

Another technique is described in US 20220414519 A1 (Reducing Errors with Circuit Gauge Selection, McClean et al., Google, 2022). The idea is to use a method equivalent to Clifford Twirling in order to Tailor the effective noise channel of the entire circuit into a global depolarising channel.

Once this has been achieved, the mitigation can be performed by a simple procedure of shifting and rescaling the noisy observable estimate, if the noise level is known quantitatively. However, in order to ensure true global depolarising noise one is likely to require a large number of twirling gates. Furthermore, the twirling gates will introduce their own noise into the circuit, which may make it more difficult to ensure the noise model is globally depolarising. Another similar technique can be found in WALLMAN JOEL J. ET AL: "Noise tailoring for scalable quantum computation via randomized compiling", 2016.

In general, the prior art techniques: introduce additional errors into a circuit, are only applicable to certain types of gates, and/or require a large number of twirling gates, and/or cannot characterise all possible Pauli channels, and/or do not account for errors induced by the twirling and mitigating operators, and/or remain not efficient for twirling Pauli gates.

### BRIEF DESCRIPTION OF THE INVENTION

An object of the present invention is to remedy the aforementioned drawbacks by proposing a computing system that can measure an output of a quantum circuit using a deterministic procedure without the need for optimisation, without intrinsic bias and without introducing additional errors. Furthermore, the gates can be easily changed and the method can work with arbitrary error channels.

In order to implement the recursive mitigation strategy, classical and quantum computers work together to implement a quasi-stochastic instruction list recursively. A quasi-stochastic instruction list is given by: $ℑ = {\left\{{c}_{1 , i}:{ℑ}_{1 , i}\right\}}_{i = 0}^{{N}_{ℑ , 1}} , {\left\{{c}_{2 , i}:{ℑ}_{2 , i}\right\}}_{i = 0}^{{N}_{ℑ , 2}} , … , {\left\{{c}_{{N}_{G} , i}:{ℑ}_{{N}_{G} , i}\right\}}_{i = 0}^{{N}_{ℑ , {N}_{G}}} ,$ where ${\left\{{c}_{n , i}:{ℑ}_{n , i}\right\}}_{i = 0}^{{N}_{ℑ , n}}$ is the nth quasi-stochastic instruction set and *cₙ,ᵢ* is the quasi-stochastic coefficient of sub-instruction list 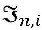 , *N*_{G} is the number of instructions in the instruction list (for the outermost instruction list this may correspond to the number of gates but could be greater if some level of recursive expansion has already been performed, before implementing the instruction list). Each sub-instruction list ( 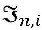 ) could be a single noisy gate, a list of noisy gates, or a recursive instruction list or set in its own right (like 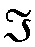 ). In order to implement a quasi-stochastic instruction list, it is converted to a deterministic instruction list, which is just a list of noisy gates implementable on the quantum hardware along with a global sign ( 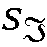 ) and a global sampling cost (*C*_{S}). Then, the deterministic instruction list is implemented on the quantum hardware and the output is multiplied by 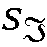 *C*_{S}. This process is completed (run) many times, (potentially) obtaining a different deterministic instruction list each time and then the results of each run are averaged. Each quasi-stochastic set ${\left\{{c}_{n , i}:{ℑ}_{n , i}\right\}}_{i = 0}^{{N}_{ℑ , n}}$ is implemented in order (concatenating the deterministic instruction lists that are obtained from each, in order) assigning them a sign (*sₙ,i*) where: ${s}_{n , i} = \frac{{c}_{n , i}}{\left|{c}_{n , i}\right|} ,$ and (local) sampling cost (*Cₙ*,_{S}): ${C}_{n , S} = {\sum }_{i = 0}^{{N}_{ℑ , n}} \left|{c}_{n , i}\right| ,$

In order to implement the set ${\left\{{c}_{n , i}:{ℑ}_{n , i}\right\}}_{i = 0}^{{N}_{ℑ , n}}$, we first define the probability of choosing the ith instruction list ( 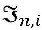 ): ${q}_{n , i} = \frac{\left|{c}_{n , i}\right|}{{C}_{n , S}} ,$ for each *i* and then an index is randomly selected (choosing index *i* with probability *q*_{*n*,*i*}), once an *i* has been chosen, 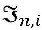 is (recursively) implemented. The (global) sign is given by: ${s}_{ℑ} = {\prod }_{n = 1}^{{N}_{G} ,} {s}_{n , {i}_{n}} {s}_{{ℑ}_{n , {i}_{n}}} ,$ where *iₙ* is the index chosen for quasi-stochastic instruction set n $\left({\left\{{c}_{n , i}:{ℑ}_{n , i}\right\}}_{i = 0}^{{N}_{ℑ , n}}\right) , {s}_{{ℑ}_{n , i}}$ is the global sign of 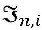 (defined recursively), and *N*_{G} is the number of instruction lists (or sets) explicitly within instruction list 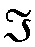 (this could be equal to the number of gates but need not be). Since these indices are chosen randomly, a different index may be obtained each time the quasi-stochastic instruction list is implemented. The (global) sampling cost is given by: ${C}_{S} = {\sum }_{i = 0}^{{N}_{M}} \left|{c}_{n , i}\right| {C}_{{ℑ}_{n , {i}_{n}}} .$ where is the global sampling cost of The number of runs required on the fly can be determined by adding up the sampling costs over every run and solving: $N = {\left(\frac{{\sum }_{m = 1}^{N} {C}_{S , m}}{σ}\right)}^{\frac{2}{3}} ,$ for N, where *σ* is the target standard deviation and *C*_{S,*m*} is the global sampling cost found for the mth implementation of the quasi-stochastic instruction list (in practice the quasi-stochastic instruction list is implemented until the right-hand-side of Eq. (17) is greater than or equal to the left-hand-side). This should (on average) give the same number of runs as calculating the sampling cost gate-wise (see Eq. (23)). However, if on-the-fly fusing is applied (see Eq. (29)), it should result in a lower *N* than can be achieved overwise.

The present invention concerns a computing system for measuring a mitigated output of a noisy quantum circuit, the computing system comprising a classical computer and a quantum computer or device, the computing system being configured to implement the following steps:
- recursively mitigating the original circuit gates and any others used for mitigation and twirling, thereby building a quasi-stochastic instruction list composed of sequences of gates and/or channels corresponding to the mitigated circuit, and implementing recursive expansions for said quasi-stochastic instruction list to obtain a set of corresponding deterministic circuit lists,
- quasi-stochastically executing the set of deterministic circuit lists on the quantum computer or device, returning a set of corresponding measurement outputs, and
- estimating a mitigated output by combining said set of measurement outputs.

The system of the present invention enables high-precision mitigation since the remaining uncertainty is due only to limitations of characterisation, initialisation, and measurement precision and limitations in the number of repeats of the experiment.

Advantageously, the computing system is configured to build said quasi-stochastic instruction list by implementing the following steps:
- building for each given gate in the quantum circuit a corresponding quasi-stochastic elementary instruction list equivalent to the noise-free given gate, and determining its associated elementary sampling cost,
- building the quasi-stochastic instruction list from all the quasi-stochastic elementary instruction lists corresponding to all the gates of the quantum circuit, and
- calculating the sampling cost corresponding to the mitigated circuit by multiplying the elementary sampling costs of all the gates.

This allows the quality of an instruction list to be deterministically quantified in terms of sampling cost, and the costs and benefits of swapping gates in and out to be accurately determined.

Advantageously, the building of the quasi-stochastic elementary instruction list corresponding to any given gate in the quantum circuit comprises the implementation of the following steps:
- characterising the given gate's noise model,
- replacing the given gate with a mitigated gate *Ũ*_{M}. The mitigated gate *Ũ*_{M} (which is actually a quantum channel) is identified by an 'M' label, the tilde " ^{~} " indicates that the gate is noisy (or at least was before it was mitigated),
- replacing the mitigated gate with a twirled gate *Ũ*_{Tw} and a (mitigated) mitigation channel 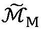 (which are stochastic sets of mitigated Pauli operators *P̃_{i,M}*),
- expanding each twirled gate in terms of mitigated Pauli operators *P̃ᵢ,_{M},* a noisy implementation of the gate *Ũ,* and mitigated twirling operators *W̃*_{*i,*M},
- applying recursive mitigation with the mitigated twirling operators as target gates, and
- terminating the recursion by providing an explicit form for the mitigated Pauli operators.

This reduces the optimisation burden, since the mitigation procedure requires only a relatively small set of basis operators to optimise over (namely the mitigated Pauli operators) and the optimisation problem is equivalent to a linear perceptron, so it is easy to solve and guaranteed to converge. Obtaining the mitigated Pauli operators themselves could require a more costly optimisation but other strategies, such as that illustrated in Eq. (19), could be used to produce Twirled Pauli operators, which can be easily mitigated. One simply needs to find a linear combination of Twirled Pauli operators equivalent to the target mitigated Pauli operator, which is again a linear optimisation problem.

Advantageously, the recursive mitigation implemented by the computing system involves the tailoring of gates, such that the tailoring of a target gate *Ũ*_{T} comprises the following steps:
- implementing a set ${\left\{{{U}^{˜}}_{i}\right\}}_{i = 0}^{{N}_{M}}$ of noisy gate-variants, where *N*_{M} is the number of additional gates required for the mitigation or tailoring, said noisy gate-variants being different implementations of the target gate *Ũ*_{T} to be tailored with different noise models, and/or characterising each noisy gate-variant *Ũ*ᵢ by determining its corresponding noise channel *εᵢ*, each noise channel *εᵢ* being represented by a corresponding error transfer matrix *T̂_{εᵢ}*; each noisy gate being represented by a corresponding error transfer matrix *T̂_{Ũ}_{ᵢ}*: ${\hat{T}}_{{{U}^{˜}}_{i}} = {\hat{T}}_{{ε}_{i}} {\hat{T}}_{U} ,$ where *T̂_{U}* is the transfer matrix that represents the noise-free component (*U*) of the gates *Ũ*_{T} and *Ũᵢ*; and
- determining a linear combination of the noise channels *εᵢ* that is equivalent to a tailored noise channel *ε*_{T} of interest, the tailored noise channel *ε*_{T} of interest being represented by a corresponding tailored error transfer matrix *T̂*_{*ε*_{T}}, such that the determination of said linear combination is equivalent to solving the following target equations: ${\sum }_{i = 0}^{{N}_{M}} {c}_{L , i} {\hat{T}}_{{ε}_{i}} = {\hat{T}}_{{ε}_{T}} ,$ where *c*_{L,*i*} are the coefficients of the linear combination required to produce the target gate *U*_{T}. For example: ${\sum }_{i = 0}^{{N}_{M}} {c}_{L , i} {\hat{T}}_{{{U}^{˜}}_{i}} = {\hat{T}}_{{{U}^{˜}}_{T}} ,$ where *T̂_{Ũ}*_{_{T}} is the transfer matrix that represents the target gate *Ũ*_{T}. This allows converting general noise into Pauli noise without requiring Pauli twirling, thus we can use this approach to produce Twirled Pauli operators, which can be combined to produce mitigated Pauli operators.

Advantageously, the computing system is configured to determine a set of noisy variants and their corresponding linear coefficients c_{L,*i,n*} (the ith coefficient for the nth gate) such that the local sampling cost and/or local increase in circuit duration is/are minimised. The local sampling cost is given by: ${C}_{L , S , n} = {\sum }_{i = 0}^{{N}_{M}} \left|{c}_{L , i , n}\right|$ and the local increase in gate duration by: ${F}_{L , S , n} = {\sum }_{i = 0}^{{N}_{M}} \frac{\left|{c}_{L , i , n}\right|}{{C}_{S}} \frac{{τ}_{L , i , n}}{{τ}_{L , n}} ,$ where *τ*_{L,*i,n*} is the time required to implement *Ũᵢ* for the nth gate (e.g. U) and *τ*_{L,*n*} is the time that would be required to implement the nth noise free gate (e.g. U). The (global) sampling cost is (see Eq. (3)) ${C}_{S} = {\prod }_{n = 1}^{{N}_{G}} {C}_{L , S , n} ,$ where *N*_{G} is the number of noisy gates that are being mitigated in the circuit, and the (global) increase in circuit duration is (see Eq. (4)): ${F}_{S} = {\sum }_{n = 1}^{{N}_{G}} {F}_{L , S , n} \frac{{τ}_{L , n}}{τ} .$

This reduces the number of times the quantum computer needs to run to achieve a high level of accuracy, or reduces the total runtime of the mitigation procedure if we minimise *F*_{L,S,*n*} and *C*_{L,S,*n*} -

Advantageously, the computing system is configured to implement the following steps:
- fusing mitigated gates: e.g. mitigated twirling gates and/or mitigated Pauli operators, wherever possible by replacing two neighbouring twirling gates or two mitigated neighbouring Pauli operators with a single fused twirling gate or a single fused Pauli operator respectively. Fusing reduces circuit length and sampling cost and thus results in a shorter runtime for the mitigation procedure.

For example, since: ${\hat{T}}_{X} {\hat{T}}_{Y} = {\hat{T}}_{Y} {\hat{T}}_{X} = {\hat{T}}_{Z}$ where *T̂*_{X} is the transfer matrix associated with the Pauli X gate, *T̂*_{Y} is the transfer matrix associated with the Pauli Y gate, and *T̂*_{Z} is the transfer matrix associated with the Pauli Z gate. This means that implementing an X gate followed by a Y gate (or vice versa) is equivalent to implementing just a Z gate. We also have: ${{\hat{T}}_{X}}^{2} = {{\hat{T}}_{Y}}^{2} = {{\hat{T}}_{Z}}^{2} = {\hat{T}}_{I}$ where *T̂*_{I} is the transfer matrix associated to the identity channel (i.e. doing nothing).

Eqs. (24) and (26)(25) are sufficient to determine the fusion relations for all Pauli operators. Fusing operators makes the circuit shorter and cheaper to run (i.e. it can lower the sampling cost, *C*_{S}, and reduce the increase in circuit duration, *F*_{S}). There are two types of fusing: instruction set fusing (pre-fusing) and gate fusing ('on the fly' fusing).

Instruction set fusing is where two neighbouring instruction sets that correspond to Pauli Channels ${\left(\left\{{c}_{n , i}:{{P}^{˜}}_{i , M}\right\}\right.}_{i = 0}^{{2}^{{N}_{Q}} - 1}$ or $\left.{\left\{{δ}_{ij}:{{P}^{˜}}_{i , M}\right\}}_{i = 0}^{{2}^{{N}_{Q}} - 1}\right)$ are replaced and fused into a single Pauli Channel instruction set, e.g.: ${\left\{{c}_{n , i}:{{P}^{˜}}_{i , M}\right\}}_{i = 0}^{{2}^{{N}_{Q}} - 1} , {\left\{{c}_{m , i}:{{P}^{˜}}_{i , M}\right\}}_{i = 0}^{{2}^{{N}_{Q}} - 1} = {\left\{{c}_{F , i}:{{P}^{˜}}_{i , M}\right\}}_{i = 0}^{{2}^{{N}_{Q}} - 1} ,$ where: ${c}_{F , k} = {\sum }_{i , j : {\hat{T}}_{{{P}^{˜}}_{i , M}} {\hat{T}}_{{{P}^{˜}}_{j , M}} = {\hat{T}}_{{{P}^{˜}}_{k , M}}} {c}_{n , i} {c}_{m , j} ,$ where the sum is over every combination of *i* and *j* such that *T̂*_{P̃_{i,M}}*T̂*_{P̃_{j,M}} = *T̂*_{P̃_{k,M}}

Gate fusing is applied (on the fly) while implementing a quasi-stochastic instruction list and can achieve lower sampling costs than instruction set fusing. To implement gate fusing we use a Pauli stack, that is, an additional memory stack to store a list of consecutive mitigated Pauli operators. Every time an instruction list is obtained, while implementing the quasi-stochastic instruction list, that is equivalent to a mitigated Pauli gate, the mitigated Pauli gate is added to the Pauli stack, without adding anything to the deterministic instruction list of noisy gates, and then we move on, to the next term in the quasi-stochastic instruction list. Each time an instruction list is obtained that is equivalent to a deterministic noisy gate (e.g. *Ũ*), which can be implemented on the hardware, all the mitigated Pauli operators on the Pauli stack are fused into a single mitigated Pauli operator. The resulting mitigating Pauli operator is recursively implemented, then the resulting list of noisy gates is appended to the deterministic instruction list. The Pauli stack is cleared (reset), and then the deterministic noisy gate, that was found at the beginning (e.g. *Ũ*) is appended to the deterministic circuit list before moving onto the next element in the quasi-stochastic instruction list. For example, if the Pauli stack consists of P̃_{1,M}, P̃_{2,M}, P̃_{3,M}, P̃_{1,M} and the next element that appears in the quasi-stochastic instruction list is a deterministic noisy gate (e.g. *Ũ*) then the following fact is used: ${\hat{T}}_{{P}_{1}} {\hat{T}}_{{P}_{3}} {\hat{T}}_{{P}_{2}} {\hat{T}}_{{P}_{1}} = {\hat{T}}_{{P}_{1}} ,$ and the whole list is replaced with the single mitigated Pauli Word Operator (P̃_{1,M}), which is then recursively implemented and the resulting list of noisy gates is added to the deterministic circuit list and then the noisy gate (*Ũ*) is added before moving on.

Advantageously, the tailored noise channel *ε*_{T} of interest is: a Pauli noise channel represented by a tailored error transfer matrix whose off-diagonal elements are all equal to zero; or an identity channel corresponding to a targeted error transfer matrix equal to the identity, giving a noise-free gate.

This allows general noise to be converted to Pauli noise or to no-noise (i.e. an identity channel) without the need for Pauli twirling and without the need to access noiseless or low-noise Pauli operators. In the case of a noise-free gate, errors can be completely eliminated with precision dependent only on the precision and accuracy of the characterisation of the gate and implementation of the mitigation procedure.

Advantageously, the computing system is configured to choose the set ${\left\{{{U}^{˜}}_{i}\right\}}_{i = 0}^{{N}_{M}}$ of noisy gate-variants for gate n such that the (local) sampling cost (*C*_{L,S,*n*}, see Eqs. (30), (38), and(21)) is equal to unity or that the sampling cost (*C*_{L,S,*n*}, see Eqs. (30), (38), and(21)) and/or increase in circuit duration, (*F*_{L,S}, see Eqs. (30), (38), and (22)) are/is minimal, and to only solving the equations relating to the off-diagonal elements of the error transfer matrices *T̂_{εᵢ}*, from Eq. (38).

This allows a high level of precision to be achieved, as the remaining uncertainty is only due to the limitations of the measurement precision and limitations on the number of executions on the quantum computer.

According to another implementation of the present application, the computing system is configured to implement mitigation on the fly by generating the quasi-stochastic instruction list as it is needed rather than prior to circuit evaluation.

Advantageously, the computing system is configured to implement the following steps:
- a) given the quasi-stochastic instruction list corresponding to the mitigated circuit and its corresponding sampling cost, determining a number of iterations *N* required to achieve or exceed the desired precision *σ* required for the mitigated output (see Eq. (49));
- b) implementing a recursive expansion for the given quasi-stochastic instruction list and obtaining a deterministic instruction list, or current circuit list, of gates implementable by the quantum computer or device;
- c) running the current deterministic instruction list on the quantum computer or device and returning the corresponding current observable output associated with a corresponding current sign parameter (see Eq. (14)) and a corresponding current sampling cost, and determining a current measurement output by multiplying the current observable output by the corresponding current sign parameter times the current sampling cost (see Eq. (51));
- d) repeating the above steps b) and c) *N* times and summing the measurement outputs of all *N* runs;
- e) determining an estimate of the mitigated output by dividing the summed measurement outputs by the number of repetitions *N* (see Eq. (52)).

By averaging the measurement outputs of all the deterministic circuit lists generated according to the present invention, it is possible to obtain a mitigated output (or a noise-free output) equivalent to an answer that would have been obtained had there been no (or lower) noise.

Advantageously, the number of repetitions *N* is determined by the square of the ratio of the total quantum circuit sampling cost *C*_{S} to the desired precision *σ*, according to Eq. (5), or on the fly with Eq. (17).

Knowing the sampling cost and the required precision enables one to work out in a simple manner the number of times the experiment has to be run (*N*) or (for on the fly mitigation) when the experiment has been run a sufficient number of times.

Advantageously, the computing system is configured to implement the recursive expansion for the given quasi-stochastic instruction list by executing the following operations:
- f) initialising an empty circuit list, initialising a sign parameter to '+1', initialising a sampling cost to '1', initialising an empty index stack, and an empty Pauli stack;
- g) viewing the top instruction of the quasi-stochastic instruction list such that:
- h) if said top instruction is a noisy gate, then fusing all the Pauli Words (if any) on the Pauli stack, applying recursive expansion to the mitigated version of the resulting fused Pauli operator and appending the resulting circuit list to the current circuit list and then resetting the Pauli stack to an empty list, and appending the noisy gate to the current circuit list,
- i) if said top instruction is a mitigation channel, then randomly choosing one of the instruction lists related to the mitigation channel according to the channel probability distribution (*q*_{L,*i*}, Eq. (41)), multiplying the current sign parameter by the corresponding sign factor (*s*_{L,*i*}, Eq. (42)), and multiplying the current sampling cost by the corresponding sampling cost factor (*C*_{L,S}, Eq. (40)), applying a recursive expansion with this new instruction list, and appending the resulting circuit list to the current circuit list,
- j) if said top instruction is an opening twirling channel, then randomly choosing one of the instruction lists related to the opening twirling channel according to the channel probability distribution (*q*_{L,*i*}, Eq. (47)), applying recursive expansion with this new instruction list, appending the circuit list obtained to the current circuit list, and multiplying the current sign parameter and current sampling cost by the sign parameter (*s*_{L,*i*}, Eq. (48)) and sampling cost (*C*_{L,S}, Eq. (45)) found for the new instruction list, and adding the index of the instruction list used to the index stack,
- k) if said top instruction is a closing twirling channel, then viewing and removing the most recent index from the stack, extracting the instruction list from the closing twirling channel with the corresponding index, applying recursive expansion with this new instruction list, appending the resulting circuit list to the current circuit list, and multiplying the current sign parameter and current sampling cost by the sign parameter and sampling cost found for the new instruction list,
- l) if said top instruction is a mitigated Pauli operator, then if fusion is required: adding the operator to the Pauli stack. If fusion is not required: applying recursive expansion with this new instruction list for the mitigated Pauli operator, appending the resulting circuit list to the current circuit list, and multiplying the current sign parameter and current sampling cost by the sign parameter and sampling cost found for the new instruction list, and
- m) discarding the top instruction from the quasi-stochastic instruction list and if the quasi-stochastic instruction list is not empty, then repeating steps g) to m), else returning the current circuit list, current sign parameter (*sₘ*, Eq.(15)), and current sampling cost (*C*_{S,*m*}, Eq. (16)).

Advantageously, the computing system comprises a classical-quantum interface configured to couple the classical computer to the quantum computer or device.

The present invention concerns also a computing method for measuring an output of a quantum circuit, comprising the following steps:
- recursively mitigating the original circuit gates and any others used for mitigation and twirling, thereby building a quasi-stochastic instruction list composed of sequences of gates and/or channels corresponding to the mitigated circuit, and implementing recursive expansions for said quasi-stochastic instruction list to obtain a set of corresponding deterministic circuit lists,
- quasi-stochastically executing the set of deterministic circuit lists on the quantum computer or device, returning a set of corresponding measurement outputs, and
- estimating a mitigated output by combining said set of measurement outputs.

### BRIEF DESCRIPTION OF THE DRAWINGS

The present invention will be better understood from the description of the following embodiments, by way of illustration and in no way limitative thereto:
Fig. 1 schematically represents a computing system for making a mitigated measurement of the output of a quantum circuit, according to a preferred embodiment of the present invention;
Fig 2 is a flowchart schematically representing the steps realised by the computing system for building a quasi-stochastic instruction list by implementing a recursive mitigation of a quantum circuit, according to an embodiment of the present invention;
Fig 3 is a first flowchart schematically representing the steps realised by the computing system for building a quasi-stochastic elementary instruction list, according to a preferred embodiment of the present invention;
Fig 4 is a flowchart schematically representing the steps of the recursive expansion of a given gate, according to the implementation of Fig.3;
Figs. 5A-5G schematically represent an example of the recursive mitigation of a quantum circuit, according to the flowcharts of Figs. 3 and 4;
Fig 6 is a flowchart schematically representing the steps realised by the computing system implementing the tailoring of a target gate *Ũ*_{T}, according to an embodiment of the present invention;
Fig 7 is a flowchart schematically representing the steps realised by the computing system for repeatedly applying the flowchart of Fig. 3 or Fig. 4 in order to provide a quasi-stochastic instruction list for the entire circuit, according to a preferred embodiment of the present invention;
Fig. 8 is a flowchart schematically illustrating the steps implemented by the computing system for implementing a quasi-stochastic instruction list relating to a gate or circuit section and expanding it into a deterministic list of noisy gates, according to a preferred embodiment of the present invention; and
Fig 9 is a flowchart schematically representing a recursive implementation that takes a quasi-stochastic instruction list or circuit and returns a mitigated observable estimate after running a mitigated version of the circuit on the quantum computer.

### DETAILED DISCLOSURE OF PARTICULAR EMBODIMENTS

The present invention proposes a computing system for measuring a mitigated observable and in particular, an output of a quantum circuit. The principle of the present invention is to recursively expand the quantum circuit using mitigated elements to perform mitigation and tailoring in a way that additional errors are not introduced during the mitigation.

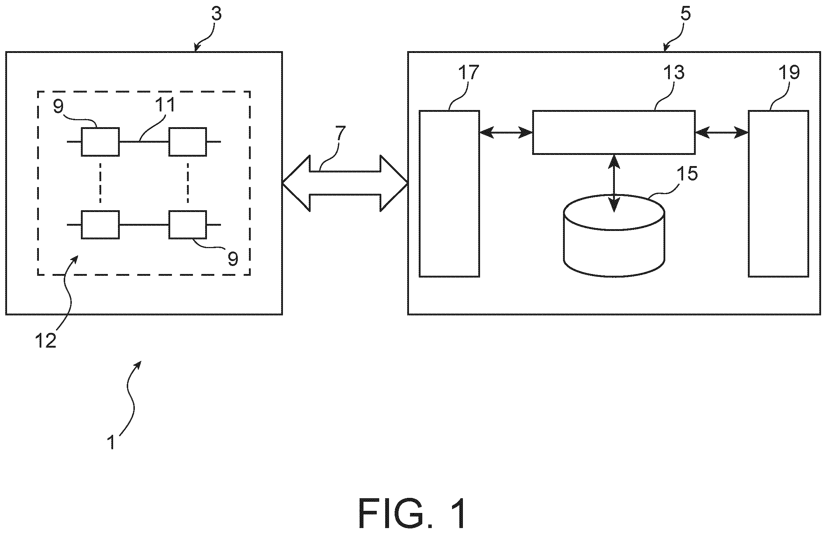

Fig. 1 schematically represents a computing system for measuring an output of a quantum circuit, according to a preferred embodiment of the present invention.

The computing system 1 comprises a quantum computer or device 3, a classical computer 5, and a classical-quantum interface 7. It is configured to measure a mitigated output of a quantum circuit.

The quantum circuit 12 is comprised of different types of quantum gates 9 that are interconnected by wires 11. The wires 11 represent periods of time when no gate is applied. The length of the wires is not necessarily proportional to the time, but they are included to ensure that the gates occur in the correct order. The quantum gates 9 execute some operations on the qubits as part of a quantum computation.

The quantum computer or device 3 comprises specific hardware that supports the preparation, manipulation, and measurement of quantum states. The classical computer 5 comprises the usual processor 13, memory 15 and input/output 17, 19 units. The classical-quantum interface 7 is configured to couple the classical computer 5 to the quantum computer 3.

The computing system 1 is configured to recursively mitigate the original circuit gates 9 and any others used for mitigation and twirling. Each part of the mitigation procedure is recursively mitigated to ensure that there is no (or reduced) intrinsic error (bias) in the mitigated circuit. This mitigation procedure results in building a quasi-stochastic instruction list composed of sequences of gates and/or channels corresponding to the mitigated circuit. The quasi-stochastic instruction list can be recursive, for example a channel may have an instruction list that calls for the application of a mitigated gate (which has its own instruction list).

The computing system 1 is then configured to implement recursive expansions for the quasi-stochastic instruction list to obtain a set of corresponding deterministic circuit lists. The quantum computer or device 3 is then configured to repeatedly execute the set of deterministic circuit lists, returning a set of corresponding measurement outputs. The computing system 1 is then configured to estimate a mitigated output by combining the elements of the set of measurement outputs.

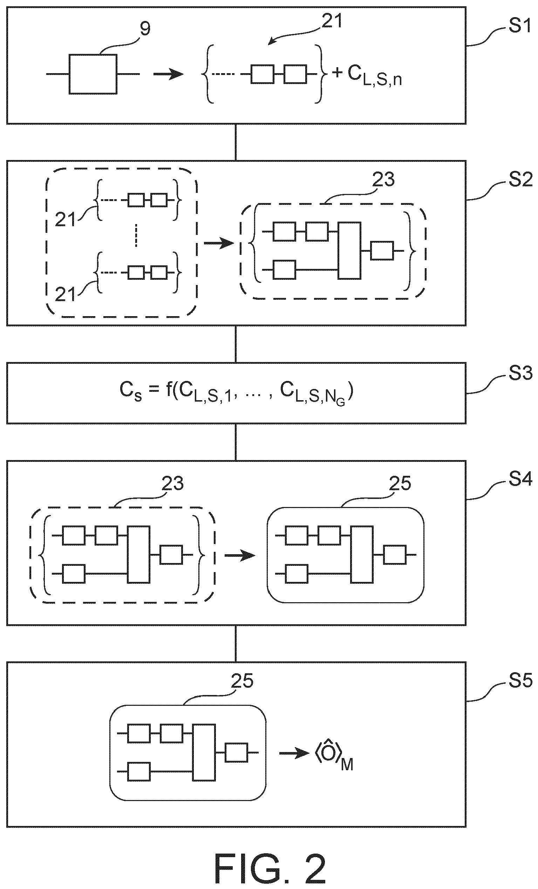

Fig 2 is a flowchart schematically representing the steps realised by the computing system for building a quasi-stochastic instruction list by implementing a recursive mitigation of a quantum circuit, according to an embodiment of the present invention.

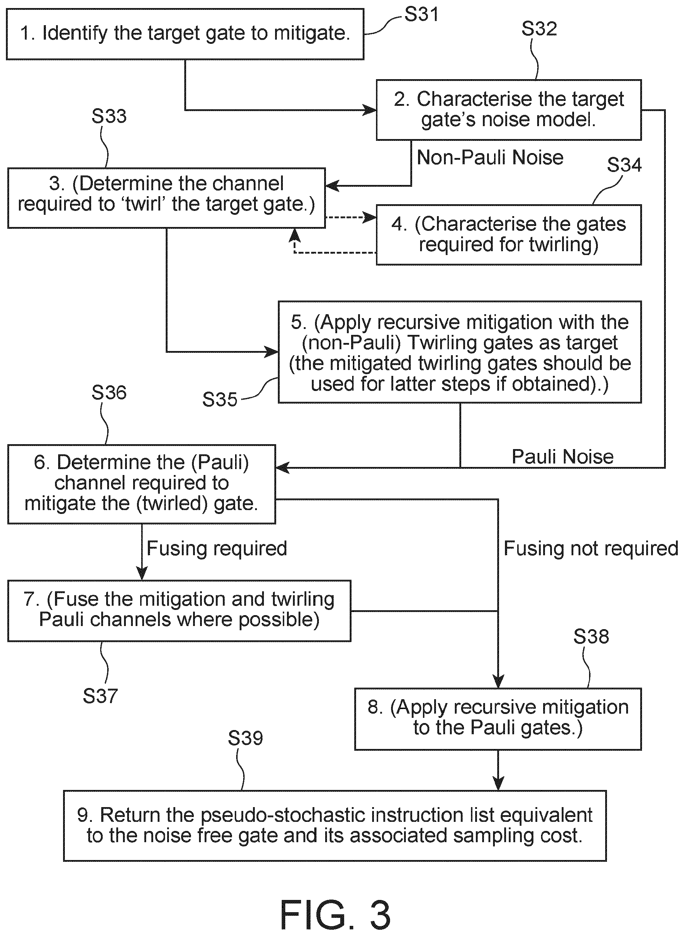

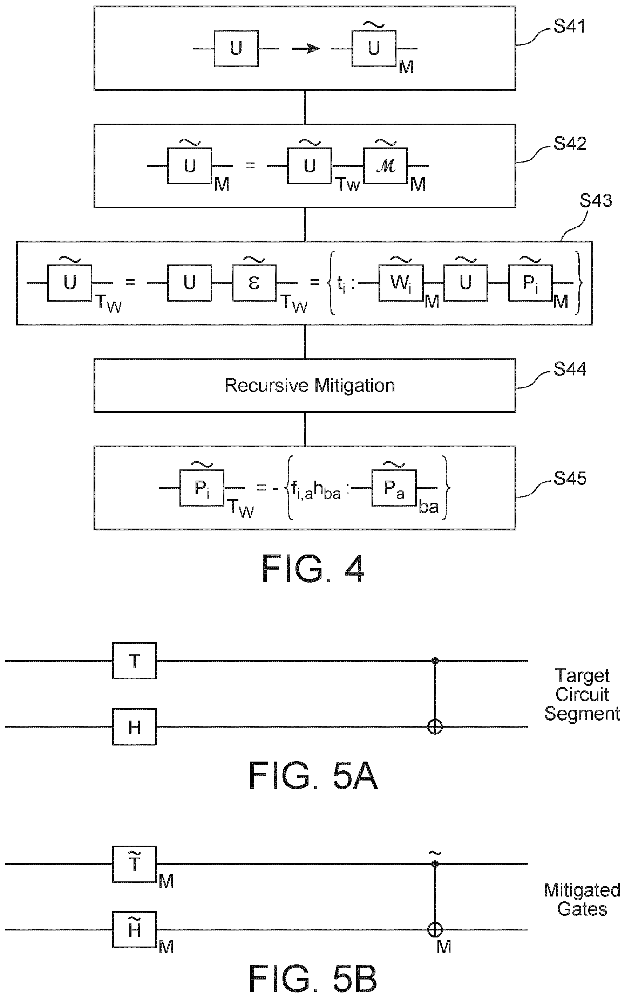

In step S1, the computing system 1 is configured to build for each given gate 9 in the quantum circuit 12 a corresponding quasi-stochastic elementary instruction list 21 equivalent to the noise-free (or reduced noise) given gate and to determine its associated local sampling cost *C*_{L,S,*n*} (see Eq. (21)). This step is described in detail in Figs. 3 and 4.

In step S2, the computing system 1 is configured to build the quasi-stochastic instruction list 23 from all the quasi-stochastic elementary instruction lists 21 corresponding to all the gates 9 of the quantum circuit 12.

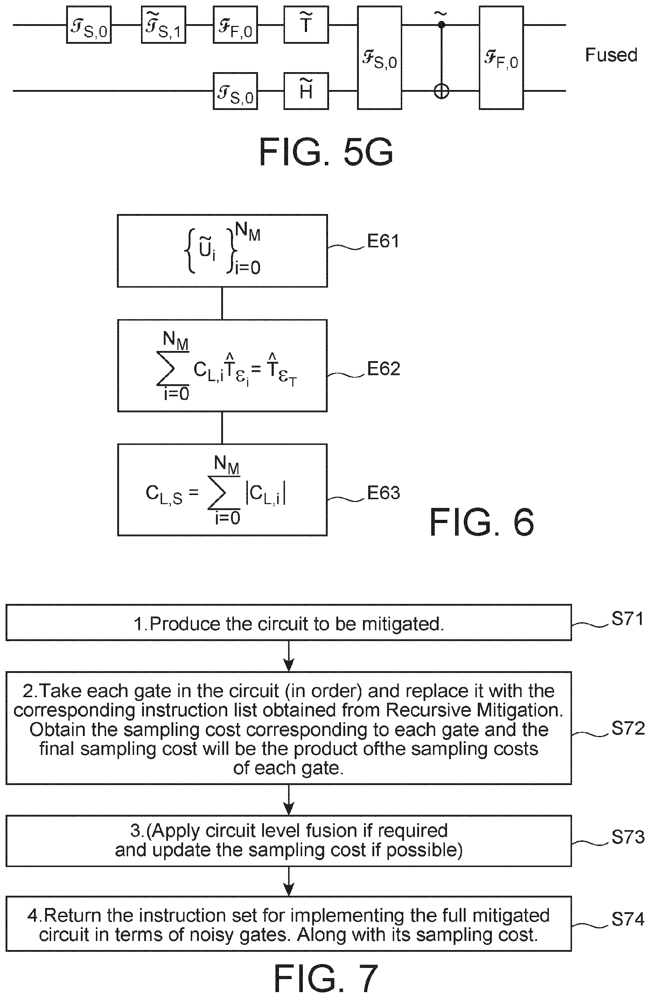

In step S3, the computing system 1 is configured to calculate the total sampling cost *C*_{S} (see Eq. (23)) corresponding to the mitigated circuit as a function of the elementary sampling costs *C*_{L,S,1}, ..., *C*_{L,S,N_{G}} of all the gates. In particular, the sampling cost *C*_{S} is calculated by multiplying the elementary sampling costs *C*_{L,S,1}, ..., *C*_{L,S,N_{G}} of all the gates together. Steps S2 and S3 are also described in detail in Fig. 7.

In step S4, the computing system 1 is configured to implement recursive expansions for the quasi-stochastic instruction list 23 to obtain a set of corresponding deterministic circuit lists 25.

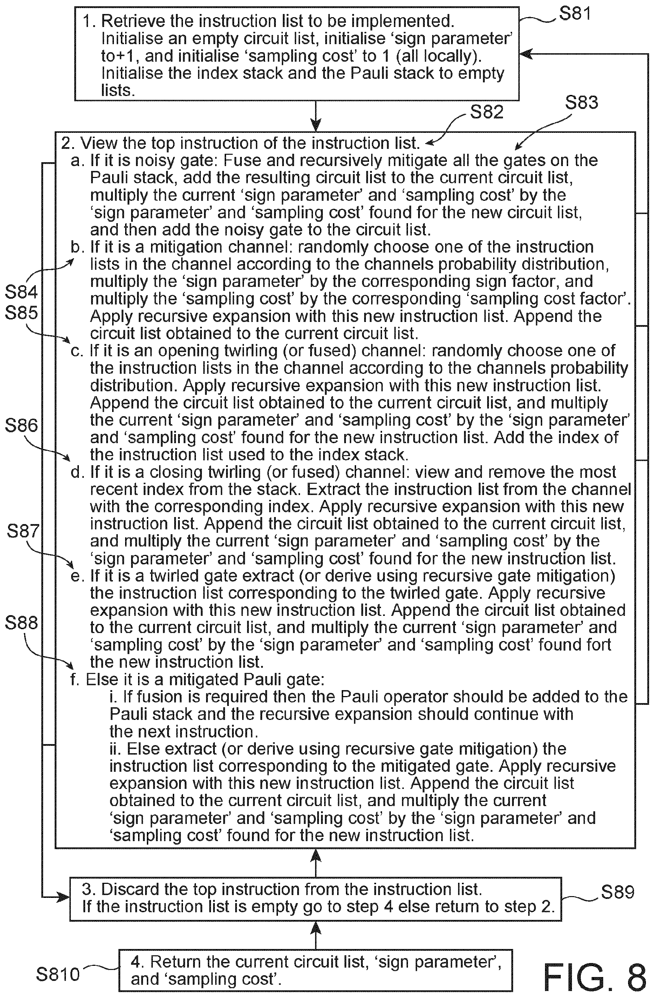

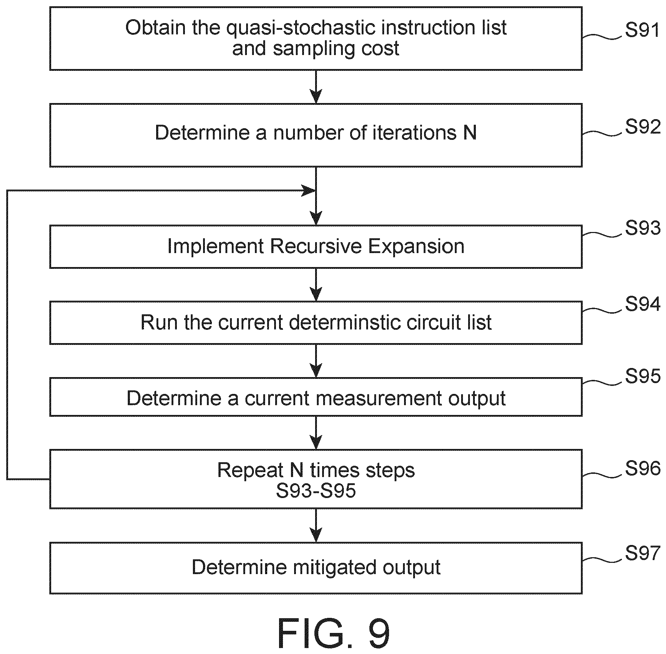

In step S5, the computing system 1 is configured to repeatedly execute the set of deterministic circuit lists 25 and to determine a mitigated output or result (〈*Ô*〉_{M}). Steps S4 and S5 are also described in detail in Figs. 8 and 9.

Figs. 3, 4, 6-9 are flowcharts representing in detail the steps of the flowchart of Fig.2 realised by the computing system of Fig. 1, according to a preferred embodiment of the present invention.

We have separated the procedures that can take place entirely using a standard 'classical' computer (left column) from those that require access to the quantum computer (right column). Procedures on the quantum side may also require classical computing resources. Two possible examples of recursive mitigation implementation are provided, but other possibilities exist. The two implementations are: 'On the fly': where we start with a target quantum circuit and for each run of the circuit we(randomly) determine a deterministic instruction list for each gate such that repeating this procedure many times is equivalent to implementing the mitigated circuit (this could be carried out at the level of the full circuit prior to execution or 'live' with each gate being expanded when it appears in the circuit, the optimal choice may depend on the latency of the classical control system); and 'Pre-determined': where the original circuit is taken and all gates are replaced with their mitigated versions and then one (recursively) produces a quasi-stochastic instruction list (containing only noisy gates) that has an output that is the same as what would be obtained if the original circuit was implemented with all the gates replaced by their mitigated versions, in this case the quasi-stochastic instruction list is implemented by deriving an independent (deterministic) instruction list, which is a sample of the quasi-stochastic instruction list, each time one wishes to make a run of the circuit.

These flowcharts have two components, instruction building and circuit implementation. A first group of flowcharts (Figs. 3-8) is for building instruction lists for each mitigated gate and a second group of flowcharts (Figs. 9 and 10) is for running those instruction lists on a quantum computer 3 and obtaining a mitigated observable estimate.

In order to implement the instruction building component one could build a dictionary of instructions or recipes for mitigating each gate we require for a circuit. What we consider as a separate gate may vary depending on our hardware and the uniformity of our noise model. For example: we may need a separate list of instructions for each set of qubits a named gate acts on, or, if we have a very uniform noise model we may find every X gate has the same list of mitigation instructions no matter which qubit it acts on. So, we may produce a MENU (Mitigate Every Noisy Unitary), that is a dictionary of instructions for producing all our mitigated gates. An example of such a Menu is given in Fig. 4.

Fig 3 is a first flowchart schematically representing the steps realised by the computing system for building a quasi-stochastic elementary instruction list, according to a preferred embodiment of the present invention.

This flowchart provides an algorithm for producing a mitigated gate by recursively producing a quasi-stochastic elementary list for the gate itself and any other mitigated gates required to implement the mitigated gate.

Step S31 concerns identifying the target gate to mitigate. To save time a dictionary of gates can be built so that the instruction list corresponding to each mitigated, twirled, and noisy gate can be stored. Then, if that gate is to be used again, the quasi-stochastic instruction list corresponding to that gate can be obtained from the dictionary rather than requiring it to be re-derived or characterised. Depending on the degree of uniformity of the noise, what is considered a distinct gate may vary. For example, an X gate on two different qubits might need to be considered different gates if they have inequivalent noise models or applying two gates close together might result in different noise to if they are implemented independently so such situations would have to be considered different gate instances.

In step S32 the target gate's noise model is characterised by the quantum computer 3. The characterisation can be realised directly and can use gate set tomography or a similar technique. Or it could be indirect in that the target gate could be decomposed into some basis (or native) gate set then the basis (or native) gate set could be characterised and the target gate could be characterised by composing the noisy native gates that the target gate was decomposed into. This process is not necessarily unique and a number of different decompositions may be tested in order

to ascertain the optimal choice, which could depend on the type of noise and its probability of occurring. Some other characterisation methods could be used. For example, the gates (or a basis set) can be pre-characterise and then this step would be implicit.

In step S33, the computing system 1 determines the channel required to twirl the target gate. This step is implemented only if one wishes to twirl the target gate. In this step, Pauli twirling or some other twirling procedure can be used, such as: optimised Pauli twirling, Clifford twirling or something else. In the case of standard Pauli twirling, the twirling operators required to obtain Pauli noise from non-Pauli noise can be determined using the appropriate equation (see Eq. (44)).

In step S34, the quantum computer 3 characterises the gates required for twirling. This step is implemented only if one uses an approach with multiple hardware implementations of the target gate as described in relation to the flowchart of Fig. 6. In this case one may need to characterise additional gates in order to perform the twirling.

In step S35, recursive mitigation is applied with the non-Pauli twirling gates as target. Indeed, if a recursion depth greater than zero for the target gate is permitted then the computing system 1 runs through the whole recursive mitigation procedure for each of the twirling gates. This means each implementation of a twirling gate can be replaced by the mitigated twirling gate, which is an instruction list including stochastic and deterministic components as well as multiplicative factors and signs. The implementation of such an instruction list is explained in more detail in the recursive implementation flow chart of Fig. 9. To facilitate fusion, the mitigation of the Pauli gates can be left until step S38 (or if we are using 'on the fly' fusion we can leave the mitigated Pauli operators and channels without applying recursive mitigation until we implement the instruction list where we will apply fusion and the recursive expansion of the remaining mitigated Pauli operators).

In step S36, noise characterisation is used to determine the Pauli channel required to effect the mitigation. If the vector *̅p̅*̅ represents the 'probabilities' related to the Pauli error channel ${\left(\left\{{p}_{i}:{{P}^{˜}}_{i}\right\}\right.}_{i = 0}^{{2}^{{N}_{Q}} - 1}$, i.e. (*̅p̅*̅)₀ is the probability of no error, (*̅p̅*̅)₁ is the probability of an erroneous X gate acting, (*̅p̅*̅)₂ is the probability of an erroneous Y gate acting, etc.) then, the mitigation channel coefficient vector: ${c}^{⇀}$ (where (*̅c̅*̅)*ᵢ* = *c*_{M,*i*}, where *c_{M,i}* is the coefficient of the ith component of the mitigation channel: ${{M}^{˜}}_{M} = \left.{\left\{{c}_{M , i}:{{P}^{˜}}_{i , M}\right\}}_{i = 0}^{{2}^{{N}_{{Q}_{- 1}}}}\right)$ is defined as follows: ${c}^{⇀} = \frac{1}{{4}^{{N}_{Q}}} {\hat{\pm }}_{{N}_{Q}} {\left({\hat{\pm }}_{{N}_{Q}}{p}^{⇀}\right)}^{⊙ - 1}$ where the circle with the dot means 'apply operation elementwise', *N*_{Q} is the number of qubits, and where ±̂_{*N*_{Q}} and ±̂₁ are given by: ${\hat{\pm }}_{{N}_{Q}} = {⊗}_{n = 1}^{{N}_{Q}} {\hat{\pm }}_{1}$ ${\hat{\pm }}_{1} = \left(\begin{matrix}1 & 1 & 1 & 1 \\ 1 & 1 & - 1 & - 1 \\ 1 & - 1 & 1 & - 1 \\ 1 & - 1 & - 1 & 1\end{matrix}\right)$

Once the required Pauli channel is available, it is possible to make use of mitigated Pauli operators $\left({{M}^{˜}}_{M}={\left\{{c}_{L , i}:{{P}^{˜}}_{i , M}\right\}}_{i = 0}^{{2}^{{N}_{{Q}_{- 1}}}}\right)$, or a set of 'twirled' Pauli operators $\left({{M}^{˜}}_{M}={\left\{{c}_{L , Tw , i}:{{P}^{˜}}_{i , Tw}\right\}}_{i = 0}^{{2}^{{N}_{{Q}_{- 1}}}}\right.$, where *c*_{L,Tw,*i*} ≠ *c*_{L,*i*}) to produce a linear combination that is equivalent to the desired channel. Fusion may be harder with the latter approach but it may be required to produce mitigated Pauli operators. Nevertheless, if fusion is required, we go to step S37 and if not, we go directly to step S38.

In general, fusion involves combining two Pauli gates (or quasi-stochastic Pauli channels) into a single gate (or channel), since the product of two Pauli operators is equivalent to a Pauli operator in terms of the channel it implements (e.g. see Eq. (25)).

Thus, in step S37, the computing system 1 is configured to implement the fusing of mitigated gates (e.g. mitigated twirling gates and/or mitigated Pauli operators), wherever possible by replacing two neighbouring twirling gates or two mitigated Pauli operators with a single fused twirling gate or a single fused Pauli operator respectively. This can be carried out at the gate level where one half of the twirling channel and its neighbouring mitigation channel are combined to produce a single channel that is equivalent to applying one channel then the other. It can also be carried out at the full circuit level so that channels from neighbouring gates can be combined together. Fusing any neighbouring Pauli operators could also be applied at the implementation level when the circuit has been fully expanded (except for the mitigated Pauli operators). It is important to note that fusion is only normally practicable with noise-free (i.e. mitigated Pauli) operators. Fusion of noisy Pauli operators is non-trivial because the noisy fused operator is unlikely to have the same noise channel as the combined effect of the noise channels of the two fused operators. For this reason, to implement Pauli fusion it is best to leave the mitigated Pauli operators un-expanded (i.e. without decomposing the mitigated Pauli operators into noisy gates) until after all fusion has taken place.

Any mitigated gate can, in theory, be fused but, in practice, most fusing, except for that of mitigated Pauli operators, takes place prior to the production of the original unmitigated circuit.

In step S38, quantum computer 3 applies recursive mitigation to the Pauli gates. At this point, any mitigated Pauli operators can be decomposed into their noisy constituents, unless one wishes to implement circuit-level or implementation-level fusion, in which case they should be left undecomposed until all fusion has taken place.

At step S39, the computing system 1 returns the quasi-stochastic elementary instruction list equivalent to the noise free gate and its associated sampling cost. The sampling cost is determined recursively for each mitigated gate. Each channel has a mitigation cost given by the weighted sum of the mitigation cost of the operators appearing in each component of the channel (e.g. see Eq. (16)), where each component has an index. The sum is weighted by the absolute value of the coefficient of the corresponding component.

Fig 4 is a flowchart schematically representing the steps of recursive expansion of a given gate, according to the implementation of Fig.3. Some examples of a dictionary of instructions for producing mitigated gates are represented in this flowchart.

In step S41 after characterising the given gate's noise model, the computing system 1 is configured to replace the given gate U it is wished to run with a mitigated gate *Ũ*_{M}. The mitigated gate *Ũ*_{M} (which is actually a quantum channel) is identified by an 'M' label, the tilde " ^{~} " indicates that the gate is noisy (or at least was before it was mitigated).

In step S42 the computing system 1 is configured to replace the mitigated gate *Ũ*_{M} with a twirled gate *Ũ*_{Tw} (i.e. a gate that has been twirled) and a (mitigated) mitigation channel 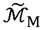 *.* This step shows that the mitigated gate *Ũ*_{M} is replaced by a twirled gate *Ũ*_{Tw} followed by a mitigated mitigation channel ${{M}^{˜}}_{M} = {\left\{{c}_{M , i}:{{P}^{˜}}_{i , M}\right\}}_{i = 0}^{{2}^{{N}_{{Q}_{- 1}}}}$, this procedure has the transfer matrix representation: ${\hat{T}}_{{{U}^{˜}}_{M}} = {\hat{T}}_{{{M}^{˜}}_{M}} {\hat{T}}_{{{U}^{˜}}_{Tw}} ,$ where *T̂_{Ũ}*_{_{M}} is the transfer matrix equivalent to the mitigated gate *Ũ*_{M}*, T̂_{Ũ}*_{_{Tw}} is the transfer matrix equivalent to the twirled gate *Ũ*_{Tw} and 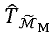 is the transfer matrix equivalent to the mitigation channel 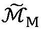 *.*

In step S43 the computing system 1 is configured to expand each twirled gate *Ũ*_{Tw} in terms of mitigated Pauli and mitigated twirling operators. The example of this step shows that a twirled gate corresponds to a stochastic combination of mitigated twirling operators followed by a noisy gate followed by a mitigated Pauli operator, as follows: ${{U}^{˜}}_{Tw} = {\left\{{t}_{i}:{{W}^{˜}}_{i , M},{U}^{˜},{{P}^{˜}}_{i , M}\right\}}_{i = 0}^{{2}^{{N}_{{Q}_{- 1}}}} ,$ where *Ũ*_{Tw} is the twirled gate, *tᵢ* is some probability (the default value is ${t}_{i} = \frac{1}{{4}^{{N}_{Q}}}$ where *N*_{Q} is the number of qubits that participate in the gate and/or noise channel, but different optimised distributions can be used that take into account the structure of the gate being twirled and its noise model), *Wᵢ* is the opening twirling operator, *W̃*_{*i*,M} is the mitigated opening twirling operator, *Ũ* is the original noisy gate, and *P̃*_{*i,*M} is the mitigated closing twirling (Pauli) operator. This procedure has the transfer matrix representation: ${\hat{T}}_{{{U}^{˜}}_{Tw}} = {\sum }_{i = 0}^{{2}^{{N}_{Q}} - 1} {t}_{i} {\hat{T}}_{{{P}^{˜}}_{i , M}} {\hat{T}}_{{U}^{˜}} {\hat{T}}_{{{W}^{˜}}_{i , M}} = {\hat{T}}_{{ε}_{Tw}} {\hat{T}}_{U} ,$ where *T̂_{Ũ}_{_{Tw}}* is the transfer matrix equivalent to the twirled gate *Ũ*_{Tw}, *T̂_{W̃}*_{_{i,M}} is the transfer matrix equivalent to the mitigated opening twirling gate *W̃*_{*i*,M}, *T̂_{Ũ}* is the transfer matrix equivalent to the noisy gate *U, T̂*_{P̃_{i,M}} is the transfer matrix equivalent to the mitigated Pauli Word operator P̃_{*i*,M}. *T̂_{U}* is the transfer matrix equivalent to the noise-free component (*U*) of the noisy gate *Ũ* and *T̂*_{ε_{Tw}} is the transfer matrix equivalent to the twirled error channel ε_{Tw} (which is a Pauli error channel, i.e. $\left.{ε}_{Tw}={\left\{{p}_{i}:{{P}^{˜}}_{i}\right\}}_{i = 0}^{{2}^{{N}_{Q}} - 1}\right)$. We can split the Twirled gate into an instruction list in order to facilitate implementation: ${{U}^{˜}}_{Tw} = {T}_{S} , {U}^{˜} , {T}_{F} = {\left\{{t}_{i}:{{W}^{˜}}_{i , M}\right\}}_{i = 0}^{{2}^{{N}_{Q}} - 1} , {U}^{˜} , {\left\{{δ}_{ij}:{{P}^{˜}}_{j , M}\right\}}_{j = 0}^{{2}^{{N}_{Q}} - 1} ,$ where ${T}_{S} = {\left\{{t}_{i}:{{W}^{˜}}_{i , M}\right\}}_{i = 0}^{{2}^{{N}_{Q}} - 1}$ is the opening twirling instruction list, *Ũ* is the noisy gate being twirled, and ${T}_{F} = {\left\{{δ}_{ij}:{{P}^{˜}}_{j , M}\right\}}_{j = 0}^{{2}^{{N}_{Q}} - 1}$ is the closing twirling instruction list. *δᵢⱼ* in the closing twirling instruction list is a Kronecker Delta so in any implementation of the twirled gate, once the opening twirling instruction list is implemented (i.e. an index i is chosen, meaning operator *W̃*_{*i*,M} is applied) the closing instruction list is implemented deterministically by using the operator with the same index as was chosen for the opening instruction list (i.e. P̃_{*i*,M}).

In some cases the twirling operator *Wᵢ* will be a Pauli operator (i.e. if the gate to be twirled, U, is Clifford) but not always. A similar effect can be achieved by placing a Pauli operator before and a twirling operator after the noisy gate but the twirling operator *Wᵢ* will generally be defined differently and the (twirled) Pauli error channel ε_{Tw} will then appear before the gate.

In step S44 the computing system 1 is configured to apply recursive mitigation with the mitigated twirling operators as target gates.

In step S45 the computing system 1 is configured to terminate the recursion by providing an explicit (non-recursive) form for the mitigated Pauli operators. This may involve first providing a procedure for producing a twirled version of each Pauli gate (i.e. a version with only Pauli errors). However, this procedure cannot rely on using mitigated operators to do the twirling (otherwise we end up with an infinite recursion). The example of this step shows the expansion of mitigated Pauli operators *P̃*_{*i*,M} in terms of various noisy hardware implementations of Pauli operators, for example if we can produce the Twirled Pauli operators: ${{P}^{˜}}_{i , Tw} = {\left\{{h}_{{b}_{i}}:{{P}^{˜}}_{i , {b}_{i}}\right\}}_{{b}_{i} = 0}^{{N}_{V , i}} ,$ then the mitigated Pauli operators can be given as follows: ${{P}^{˜}}_{i , M} = {\left\{{f}_{i , a}:{{P}^{˜}}_{a , Tw}\right\}}_{a = 0}^{{2}^{{N}_{Q}} - 1} = {\left\{{f}_{i , a}:{\left\{{h}_{{b}_{a}}:{{P}^{˜}}_{a , {b}_{a}}\right\}}_{{b}_{a} = 0}^{{N}_{V , a}}\right\}}_{a = 0}^{{2}^{{N}_{Q}} - 1} ,$ where the second index *bₐ* of the noisy Pauli operator P̃*ₐ,_{bₐ}* indicates that this is a different hardware variant of the Pauli operator (P̃*ₐ*), we use *N*_{V,*a*} hardware variants in addition to the original noisy P̃*ₐ*. This procedure has the transfer matrix representation: ${\hat{T}}_{{{P}^{˜}}_{i , Tw}} = {\sum }_{{b}_{i} = 0}^{{N}_{V , i}} {h}_{{b}_{i}} {\hat{T}}_{{{P}^{˜}}_{i , {b}_{i}}} ,$ where *T̂*_{P̃_{i,Tw}}, is the transfer matrix equivalent to the twirled Pauli gate P̃_{*i*,Tw}, ${\hat{T}}_{{{P}^{˜}}_{i , {b}_{i}}}$ is the transfer matrix equivalent to the noisy hardware variant P̃*_{i,bᵢ}* of the noisy Pauli operator (P̃*ᵢ*); and we have: ${\hat{T}}_{{{P}^{˜}}_{i , M}} = {\sum }_{a = 0}^{{2}^{{N}_{Q}} - 1} {f}_{i , a} {\hat{T}}_{{{P}^{˜}}_{a , Tw}} = {\sum }_{a = 0}^{{2}^{{N}_{Q}} - 1} {\sum }_{{b}_{a} = 0}^{{N}_{V , a}} {f}_{i , a} {h}_{{b}_{a}} {\hat{T}}_{{{P}^{˜}}_{a , {b}_{a}}} ,$ where *T̂*_{P̃_{i,M}} is the transfer matrix equivalent to the mitigated Pauli gate P̃_{i,M}.

This reduces the optimisation burden, since, except perhaps, for the Pauli operators, the mitigation procedure requires only a relatively small set of basis operators (namely the mitigated Pauli operators), and the optimisation problem is equivalent to a linear perceptron, so it is easy to solve and is guaranteed to converge.

Figs. 5A-5G schematically represent an example of a recursive mitigation of a quantum circuit, according to the flowcharts of Figs. 3 and 4.

Fig. 5A represents a very simple quantum circuit or a segment of a circuit considered as a target circuit comprised of a T gate, a Hadamard gate and a CNOT gate (a universal gate set).

Fig. 5B represents a mitigated circuit using mitigated versions of the gates rather than the original gates. All the original gates in the target circuit are noisy and are thus represented by a tilde " ^{~} ". The "M" labels denote mitigated gates.

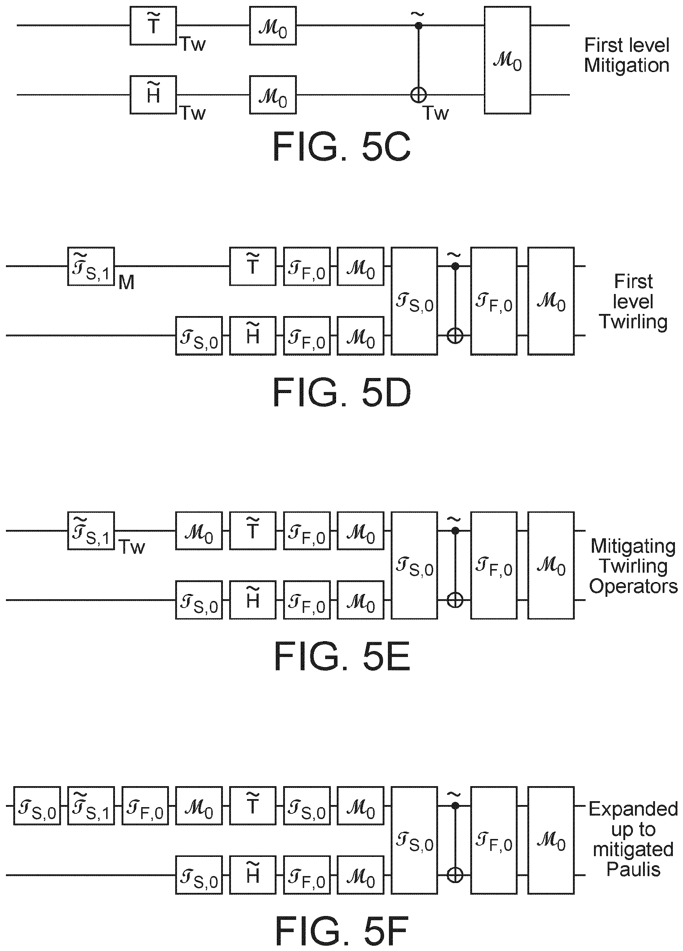

Then, in Figs. 5C -5F, the computing system recursively expands the mitigated gates until there are only noisy gates and mitigated Pauli operators (or mitigated Pauli channels).

In particular, Fig. 5C represents a first-level mitigation where the mitigated gates are expressed as twirled gates (with only Pauli noise) followed by a mitigation channel. The 'Tw' denotes a twirled gate, the *'* 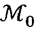 *'* are mitigation channels, the index 'zero' indicates that they use the lowest level of recursion (i.e. mitigated Pauli operators). The twirled operators could be twirled, for example, using a technique of multiple hardware implementations (explained in relation to Fig. 6) or using the technique of full Pauli twirling. This means that a twirling channel is needed before and after the noisy gates, as shown in Fig. 5D.

Fig. 5D is an example of a quasi-stochastic instruction list comprising of opening mitigated twirling channels, noisy target gates, closing mitigated twirling channels, and mitigated mitigation channels. Each noisy gate (T, H, and the two qubit CNOT), has twirling channels " 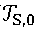 " and " 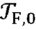 " on either side and then a mitigation channel 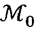 after the second twirling channel. The first twirling channel for the T gate has to be mitigated recursively because it includes non-Pauli operators so it is denoted " 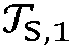 ".

In particular, Fig. 5D represents a first-level twirling where the opening/starting twirling channel " 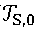 " and the closing/finishing twirling channel " 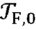 " are both needed to perform twirling but are channels composed of only mitigated Pauli operators. Also, " 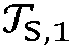 " denotes a twirling channel using mitigated Clifford operators rather than just Pauli operators.

The finishing twirling channel " 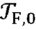 " would consist of Pauli operators if Pauli twirling is implemented. However, the starting twirling channel " 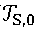 " or " 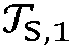 " may include more general operators. In this case, each of these operators would also be recursively mitigated. One stops the recursive expansion when all gates and channels can be expressed in terms of noisy gates (except possibly the Pauli gates, which may be left as mitigated Pauli gates to allow Pauli fusion at the circuit or implementation level).

Fig. 5E represents a stage of mitigating twirling operators where the twirling channel " 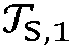 " in Fig. 5D has been mitigated.

In the next stage, represented by Fig. 5F, the computing system 1 mitigates the Clifford twirling channel based on a twirled Clifford twirling channel to form a final layer expanded up to mitigated Paulis and noisy gates. This final layer represents a quasi-stochastic instruction list composed only of noisy gates and mitigated Pauli channels corresponding to the mitigated circuit.

Recursive mitigation enables us to get around the errors induced by twirling with noisy operators by ensuring all operators at every stage are mitigated so they do not introduce additional errors.

Advantageously, the computing system is configured to fuse twirling and mitigation channels wherever possible by replacing two neighbouring gates with a single fused gate.

In fact, in the example of Fig. 5G, " 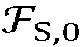 ", and " 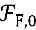 " are fused channels built by fusing twirling and mitigation channels. For example, the twirling and mitigation channels after the (noisy) T and H gates are combined with the twirling channel before the CNOT gate to form one fused channel " 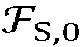 ". All the fused channels consist of a stochastic list of Pauli operators (e.g see Eq. (27)).

Fig 6 is a flowchart schematically representing the steps realised by the computing system implementing the tailoring of a target gate *Ũ*_{Tw} according to an embodiment of the present invention.

In particular, Fig. 6 refers to the steps of recursive mitigation of Fig. 3 or Fig. 4 using an approach with multiple hardware implementations of the target gate

In step S61, the computing system 1 is configured to implement a set ${\left\{{{U}^{˜}}_{i}\right\}}_{i = 0}^{{N}_{M}}$ of noisy gate-variants, where *N*_{M} is the number of additional gates required for the mitigation or tailoring. The noisy gate-variants are implementations of the target gate *Ũ*_{T} with different noise models. Each noisy gate-variant *Ũ*ᵢ has the same noise-free component (U) as *Ũ*_{T} but a different noise channel (*εᵢ* as compared to *ε*_{T} for *Ũ*_{T})*. Ũᵢ* is characterised by determining its corresponding noise channel *εᵢ*. Each noise channel *εᵢ* is represented by a corresponding error transfer matrix *T̂_{εᵢ}* (see Eq. (18)).

In step S62, the computing system 1 is configured to determine a linear combination of the noise channels *εᵢ* that is equivalent to a tailored noise channel *ε*_{T} of interest. The tailored noise channel *ε*_{T} of interest is represented by a corresponding tailored error transfer matrix *T̂*_{*ε*T}, such that the determination of the linear combination is equivalent to solving the following target equations (see Eq. (19)): ${\sum }_{i = 0}^{{N}_{M}} {c}_{L , i} {\hat{T}}_{{ε}_{i}} = {\hat{T}}_{{ε}_{T}} ,$ where *c*_{L,*i*} are the coefficients of the linear combination.

In step S63, the computing system 1 is configured to repeat steps S61 and S62 with different sets of noisy variants $\left({\left\{{{U}^{˜}}_{i}\right\}}_{i = 0}^{{N}_{M}}\right)$ in order to find a set of noisy variants and their corresponding linear coefficients *c*_{L,*i*} such that the sampling cost (see Eq. (21)): ${C}_{L , S} = {\sum }_{i = 0}^{{N}_{M}} \left|{c}_{L , i}\right|$ is minimised.

According to one embodiment of the present invention, the tailored noise channel *ε*_{T} of interest is a Pauli noise channel represented by a tailored error transfer matrix whose off-diagonal elements are all equal to zero, or an identity channel corresponding to a target error transfer matrix equal to the identity (i.e. the off-diagonal elements are all equal to zero and the diagonal elements are all equal to one), giving a noise-free gate. This allows general noise to be converted to Pauli noise or to no-noise without the need for Pauli twirling and without the need to access noiseless or low-noise Pauli operators.

Advantageously, the computing system is configured to choose the set ${\left\{{{U}^{˜}}_{i}\right\}}_{i = 0}^{{N}_{M}}$ of the noisy gate-variants such that the sampling cost *C*_{L,S}, (see Eq. (37)) is equal to unity.

According to one variant, only the equations relating to the off-diagonal elements of the error transfer matrices *T̂_{εᵢ}* and *T̂*_{*ε*_{T}} in Eq. (36) need to be solved and the computing system is configured to choose a set ${\left\{{{U}^{˜}}_{i}\right\}}_{i = 0}^{{N}_{M}}$of the noisy gate-variants such that the sampling cost *C*_{L,S} (see Eq. (37)) is minimal.

Fig 7 is a flowchart schematically representing the steps realised by the computing system for repeatedly applying the flowchart of Fig. 3 or Fig. 4 in order to provide an instruction list for the entire circuit, according to a preferred embodiment of the present invention. This flowchart is a recursive circuit instruction list builder.

Step S71 defines the initial circuit to be mitigated, which could be any quantum circuit. For example, it could be the target circuit, it could be the target circuit decomposed into a 'basis' gate set, it could be the target circuit decomposed into the native gate set, or some combination of the three.

In step S72, each gate in the circuit is taken in order with the corresponding quasi-stochastic elementary instruction list obtained from the recursive mitigation procedure of the flowchart of Fig. 3 or Fig. 4.

If there are many applications of the same gate in the circuit, then the instruction list for a given gate could be stored in a dictionary the first time it is derived, and then simply linked to or copied from the dictionary each time the gate occurs thereafter. Alternatively, it is possible to find the instruction list corresponding to the mitigated versions of some 'basis' set of gates. The next stage could consist of decomposing a target gate into the basis set of gates, then running a circuit mitigation on the sub-circuit that corresponds to the decomposed gate, and then the target gate is just replaced with the resulting instruction list.

In step S73, any neighbouring mitigated/noise-free Pauli operators or Pauli channels can be fused to reduce the circuit length.

Finally, in step S74, computing system 1 returns a single instruction list corresponding to the implementation of the full mitigated circuit. The (global) sampling cost (*C*_{S}, Eq. (23)) is also returned to allow us to determine the number of runs of the circuit required (*N*, Eq. (5)).

The sampling cost of the full circuit is the product of the sampling costs of each of the mitigated gates within the circuit, where their sampling costs are given by the sampling cost of their corresponding elementary quasi-stochastic instruction list.

If we apply circuit level fusion, the exact sampling cost may be difficult to determine, but in the low error limit, the gate-wise sampling cost will provide a reasonably tight upper bound or we can use the 'on the fly' sampling cost equation to determine the number of runs (see Eq.(17)).

Fig. 8 is a flowchart schematically illustrating the steps followed by the computing system to implement a quasi-stochastic instruction list relating to a gate or circuit section. The gate or circuit section is expanded into a set of noisy gates, according to a preferred embodiment of the present invention.

This algorithm is configured to implement a recursive expansion for a given quasi-stochastic instruction set and return a single deterministic circuit list (i.e. a single circuit implementation) and an associated sampling cost and sign factor.

In step S81, the computing system 1 is configured to retrieve the quasi-stochastic instruction list to be implemented. It initialises an empty deterministic circuit list, initialises a sign parameter to '+1', and initialises a sampling cost to '1' (all locally). It also initialise the Pauli stack as an empty list and the index stack as an empty list.

In step S82, the computing system 1 is configured to view the top instruction of the quasi-stochastic instruction list.

It is to be noted that a standard twirled operator consists of three components an opening/starting twirling channel, a noisy gate, and a closing/finishing twirling channel. The element chosen from the opening channel is random but the element chosen from the closing channel has the same index as the one chosen from the opening channel so this index is fed-forward (see Eq. (33)) via the index stack. Thus, the top instruction can be a noisy gate, an opening twirling channel, or a closing twirling channel. It can also be a (quasi-stochastic) mitigation channel (made up of mitigated Pauli gates) or a mitigated Pauli gate.

In step S83, if the top instruction viewed in step S82 is a noisy gate (e.g. *Ũ*), then the computing system is configured to fuse all mitigated Pauli Operators on the Pauli stack (if there are any), recursively expand the instruction list corresponding to the fused mitigated Pauli Operator, add the resulting circuit list to the current deterministic circuit list, and then add the noisy gate (e.g. *Ũ*) to the current deterministic circuit list.

In step S84, if the top instruction viewed in step S82 is a mitigation channel $\left({{M}^{˜}}_{M}={\left\{{c}_{M , i}:{{P}^{˜}}_{i , M}\right\}}_{i = 0}^{{2}^{{N}_{Q}} - 1}\right)$ then the computing system is configured to randomly choose one of the mitigated Pauli operators (e.g. P̃_{*i*,M}), contained within the mitigation channel, according to the channel probability distribution (Eq. (41)). It multiplies the current sign parameter by the corresponding sign factor (Eq. (42)). It multiplies the current sampling cost by the corresponding sampling cost factor (Eq. (39)). It applies recursive expansion to the resulting mitigated Pauli operator, and appends the resulting circuit list to the current deterministic circuit list. For example, if we have a mitigation channel ${{M}^{˜}}_{M} = {\left\{{c}_{M , i}:{{P}^{˜}}_{i , M}\right\}}_{i = 0}^{{2}^{{N}_{Q}} - 1}$, where: ${\hat{T}}_{{{M}^{˜}}_{M}} = {\sum }_{i = 0}^{{2}^{{N}_{Q}}} {c}_{M , i} {\hat{T}}_{{{P}^{˜}}_{i , M}} ,$ where is the transfer matrix that represents the (mitigated) mitigation channel ( 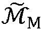 )*,* and *T̂*_{P̃}*_{i,M}* is the transfer matrix that is associated with the ith (mitigated) Pauli Operator (P̃_{*i*,M}); then the (local) sampling cost of the mitigation channel is given by (Eq. (37)): ${C}_{L , S} = {\sum }_{i = 0}^{{N}_{M}} \left|{c}_{M , i}\right| .$

The full cost of the mitigation channel is given by ${C}_{M} = {\sum }_{i = 0}^{{N}_{M}} \left|{c}_{M , i}\right| {C}_{P , i} ,$ where *C*_{P*,i*} is the cost of mitigating the ith (mitigated) Pauli Operator (P̃_{*i*,M}). The probability of choosing the ith (mitigated) Pauli Operator (P̃_{*i*,M}) is: ${q}_{L , i} = \frac{\left|{c}_{M , i}\right|}{{C}_{L , S}} ,$ and the sign parameter of the ith (mitigated) Pauli Operator (P̃_{*i*,M}) is: ${s}_{L , i} = \frac{{c}_{M , i}}{\left|{c}_{M , i}\right|} .$

So when appears in our instruction list we choose the instruction list corresponding to P̃_{*i*,M} with probability *q*_{L,i} and then multiply the current sign parameter by *s*_{L,*i*} and the current sampling cost by *C*_{L,S}. We then recursively expand the instruction list corresponding to P̃_{*i*,M} (unless we are applying fusing, in which case we just add it to the Pauli stack to deal with later, see Step S83).In step S85, if the top instruction viewed in step S82 is an opening twirling channel $\left({\left\{{t}_{i}:{{W}^{˜}}_{i , M}\right\}}_{i = 0}^{{2}^{{N}_{Q}} - 1}\right)$, then the computing system is configured to randomly choose one of the instruction lists related to the opening twirling channel (e.g. *W̃*_{*i*,M}) according to the channel probability distribution (Eq. (47)). It applies recursive expansion with this new instruction list. It appends the circuit list obtained to the current deterministic circuit list. It multiplies the current sign parameter and current sampling cost by the sign parameter (Eq. (48)) and sampling cost (Eq. (45)) found for the new instruction list. Finally, it adds the index (e.g. i) of the instruction list used to the index stack. For example, if we have a Twirled gate $\left({{U}^{˜}}_{Tw}\right. = {\left\{{t}_{i}:{{W}^{˜}}_{i , M},{U}^{˜},{{P}^{˜}}_{i , M}\right\}}_{i = 0}^{{2}^{{N}_{Q}} - 1}$, see Eq. (31)) then this consists of quasi-stochastic lists with three components each, a mitigated opening twirling gate: *W̃*_{*i*,M}, a noisy gate: *Ũ* (which is the same for all quasi-stochastic lists), and a mitigated closing twirling gate: P̃_{*i*,M} (which is a mitigated Pauli operator). Each quasi-stochastic list has an associated coefficient: *tᵢ*. So the transfer matrix representation of a twirled gate is given by: ${\hat{T}}_{{{U}^{˜}}_{Tw}} = {\sum }_{i = 0}^{{2}^{{N}_{Q}} - 1} {t}_{i} {\hat{T}}_{{{P}^{˜}}_{i , M}} {\hat{T}}_{{U}^{˜}} {\hat{T}}_{{{W}^{˜}}_{i , M}} ,$ where *T̂_{Ũ}*_{_{TW}} is the transfer matrix that represents the twirled gate (*Ũ*_{Tw}); *T̂_{Ũ}* is the transfer matrix that represents the noisy gate (*Ũ*); *T̂*_{P̃}*_{i,M}* is the transfer matrix that is associated with the ith (mitigated) Closing Twirling Channel, i.e. ith (mitigated) Pauli Operator (P̃_{*i*,M}); *T̂_{W̃}*_{_{i,M}} is the transfer matrix that is associated with the ith (mitigated) Opening Twirling Channel, where *W̃*_{*i*,M} is the mitigated version of the noisy implementation (*W̃ᵢ*) of the noise-free gate (*Wᵢ*), where: ${W}_{i} = U {P}_{i} {U}^{†} ,$ where *U* is the noise free component of *Ũ* and P*ᵢ* is the noise free component of P̃_{*i*,M}. Then the (local) sampling cost of the twirling channel is given by (Eq. (37)): ${C}_{L , S} = {\sum }_{i = 0}^{{2}^{{N}_{Q}} - 1} \left|{t}_{i}\right| ,$

The full cost of the twirling channel is given by: ${C}_{Tw} = {\sum }_{i = 0}^{{N}_{M}} \left|{t}_{i}\right| {C}_{W , i} {C}_{P , i} ,$ where *C*_{P*,i*} is the cost of mitigating the ith (mitigated) Pauli Operator (P̃_{*i*,M}) and *C_{W,i}* is the cost of mitigating the ith (mitigated) Twirling Operator (*W̃*_{*i*,M}). The probability of choosing the ith instruction list is: ${q}_{L , i} = \frac{\left|{t}_{i}\right|}{{C}_{L , S}} ,$ and the sign parameter of the ith instruction list is: ${s}_{L , i} = \frac{{t}_{i}}{\left|{t}_{i}\right|} .$

So when *Ũ*_{Tw} first appears in our instruction list it will appear as three instructions (two quasi-stochastic and one deterministic in the middle, which correspond to the opening Twirling channel, the noisy gate to be twirled, and the closing twirling channel): $: {\left\{{t}_{i}:{{W}^{˜}}_{i , M}\right\}}_{i = 0}^{{2}^{{N}_{Q}} - 1} , {U}^{˜} , {\left\{{δ}_{ij}:{{P}^{˜}}_{j , M}\right\}}_{j = 0}^{{2}^{{N}_{Q}} - 1}$ so we encounter the Opening Twirling Channel first $\left({\left\{{t}_{i}:{{W}^{˜}}_{i , M}\right\}}_{i = 0}^{{2}^{{N}_{Q}} - 1}\right)$. When we encounter the opening Twirling Channel we choose instruction list corresponding to the ith Opening Twirling Channel (*W̃*_{*i*,M}) with probability *q*_{L,*i*} and then multiply the current sign parameter by *s*_{L,*i*} and the current sampling cost by *C*_{L,S}. Then the instruction list corresponding to *W̃*_{*i*,M} is recursively expanded. The index: i of the opening twirling channel (*W̃*_{*i*,M}) that has been chosen is stored at the top of the memory stack so that next time a closing channel is encountered the most recently opened channel can be closed.

In step S86, if the top instruction viewed in step S82 is a closing twirling channel $\left({\left\{{δ}_{ij}:{{P}^{˜}}_{j , M}\right\}}_{j = 0}^{{2}^{{N}_{Q}} - 1}\right)$, then the computing system is configured to view and remove the most recent index from the stack. It extracts the mitigated Pauli operator (e.g. P̃_{*i*,M}) from the twirling channel, relating to the closing twirling channel, with the corresponding index (i). It applies recursive expansion with this mitigated Pauli operator (unless we are applying fusing, in which case we just add it to the Pauli stack to deal with later, see Step S83). It appends the resulting circuit list to the current deterministic circuit list. Finally, it multiplies the current sign parameter and current sampling cost by the sign parameter and sampling cost found for the new instruction list. See step S85 above for more details. *Ũ*_{Tw} appears in the instruction list as three instructions (two quasi-stochastic and one deterministic in the middle, which correspond to the opening Twirling channel, the noisy gate to be twirled, and the closing twirling channel): ${\left\{{t}_{i}:{{W}^{˜}}_{i , M}\right\}}_{i = 0}^{{2}^{{N}_{Q}} - 1} , {U}^{˜} , {\left\{{δ}_{ij}:{{P}^{˜}}_{j , M}\right\}}_{j = 0}^{{2}^{{N}_{Q}} - 1}$. When the Closing Twirling Channel $\left({\left\{{δ}_{ij}:{{P}^{˜}}_{j , M}\right\}}_{j = 0}^{{2}^{{N}_{Q}} - 1}\right)$ is encountered the sign (*s*_{L,*i*}) and the sampling cost (*C*_{L,S}) would have already been accounted for and so it simply looks at the top of the memory stack to find the index (i) of the last Opening Twirling Channel that has been implemented and implements the Closing Twirling Operator corresponding to that index, i.e. it takes the instruction list corresponding to P̃_{*i*,M} and recursively expands it (unless fusing is required). When the top index (i) of the memory stack has been used, it is removed to unveil the one beneath.

In step S87 if the top instruction viewed in step S82 is a twirled gate (*Ũ*_{Tw}), then the computing system is configured to recursively expand the instruction list corresponding to the Twirled gate (e.g. $\left.{\left\{{t}_{i}:{{W}^{˜}}_{i , M}\right\}}_{i = 0}^{{2}^{{N}_{Q}} - 1}, {U}^{˜}, {\left\{{δ}_{ij}:{{P}^{˜}}_{j , M}\right\}}_{j = 0}^{{2}^{{N}_{Q}} - 1}\right)$; this will involve applying S85 (opening channel, $\left.{\left\{{t}_{i}:{{W}^{˜}}_{i , M}\right\}}_{i = 0}^{{2}^{{N}_{Q}} - 1}\right)$ then S83 (noisy gate, (I⁻) then S86 (closing channel, $\left.{\left\{{δ}_{ij}:{{P}^{˜}}_{j , M}\right\}}_{j = 0}^{{2}^{{N}_{Q}} - 1}\right)$. The circuit list obtained by this recursive expansion should be appended to the current deterministic circuit list. The current sign parameter and current sampling cost should be multiplied by the sign parameter and sampling cost found for the new instruction list (which is the combination of the three components of the twirled gate instruction list).

In step S88, if the top instruction viewed in step S82 is a mitigated Pauli gate then there are two possibilities. If fusion is required (see Eq. (25)) then the computing system should add the Pauli operator to the Pauli stack it should then continue the recursive expansion of the remaining instructions in the instruction list. An exception to this is if the mitigated Pauli operator is the final instruction in the global instruction set, in this case the mitigated Pauli operator should be fused with all the operators on the Pauli stack and the following step should be followed for the fused mitigated Pauli operator (i.e. we run S83 but without the noisy gate *Ũ*). Else (if fusion is not required or the mitigated Pauli operator is the final operator in the global instruction list), the computing system is configured to extract (or derive using recursive gate mitigation) the instruction list corresponding to the mitigated gate. It applies recursive expansion with this new instruction list. It appends the circuit list obtained to the current deterministic circuit list, and multiplies the current 'sign parameter' and 'sampling cost' by the 'sign parameter' and 'sampling cost' found for the new instruction list.

In step S89, the computing system is configured to discard the top instruction from the the quasi-stochastic instruction list. If the quasi-stochastic instruction list is not empty, then the computing system is configured to repeat steps S82-S88, otherwise it returns the current deterministic circuit list, the current sign parameter, and the current sampling cost (S810).

It is to be noted that a recursive gate or circuit mitigation can be pre-implemented in steps S82-S87, in which case the circuit instruction list entered in step S81 would most likely just be a list of noisy gates. A dictionary of gate decompositions (i.e. the result of a recursive gate mitigation for each gate in the circuit, which could be a list of noisy gates to apply in order) could be provided, along with an instruction list of mitigated gates (corresponding to the target circuit). Each mitigated gate can then be looked up in the dictionary and the replacement performed.

Advantageously, recursive gate mitigation could be implemented 'on the fly' by just providing an instruction list that is a list of mitigated gates and then recursive gate mitigation could be applied (independently) to determine how to decompose each gate when it appears in the mitigated gate list. Some other recursive strategy could also be used.

According to another embodiment of the present invention, the computing system is configured to implement the mitigation 'on the fly' by generating the quasi-stochastic instruction list as it is needed, rather than prior to the circuit evaluation. That is, recursive gate mitigation could be implemented on the fly by simply providing an instruction list that is a list of mitigated gates and then applying recursive gate mitigation to determine how to decompose each gate. Some other recursive strategy could also be used.

Fig 9 is a flowchart schematically representing a recursive implementation that takes a quasi-stochastic instruction list or circuit and returns a mitigated observable estimate after running a mitigated version of the circuit on the quantum computer.

In step S91, the computing system is configured to obtain the quasi-stochastic instruction list corresponding to the mitigated circuit and its corresponding sampling cost as well as the precision required for the output.

In step S92, the computing system is configured to determine a number of iterations N required to achieve or exceed a desired precision *σ* required for the mitigated output. The desired precision *σ* may be, for example, between 1% and 10%. It is easy to work out the number of times the experiment needs to be run using the sampling cost *C*_{S} and the required precision *σ*.

In fact, in the absence of fusion, the number of repetitions *N* can be determined by the square of the ratio of the total sampling cost *C*_{S} of the quantum circuit, to the desired precision *σ*, according to the following formula (Eqs. (5) and (23)): $N = {\left(\frac{{\prod }_{n = 1}^{{N}_{G}} {C}_{L , S , n}}{σ}\right)}^{2} ,$ where *C*_{L,S,*n*} is the (local) sampling cost to mitigate the nth gate. If on the fly fusing is used (see Eq. (29)) then a lower sampling cost (and shorter circuits) can be achieved, in general. In this case the number of repetitions (*N*) can be found on the fly using Eq. (17): $N = {\left(\frac{{\sum }_{m = 1}^{N} {C}_{S , m}}{σ}\right)}^{\frac{2}{3}} ,$ where *C*_{S,*m*} is the sampling cost calculated for the mth run. This should (on average) give the same number of runs as calculating the sampling cost gate-wise (see Eq. (49)(23)). However, if on-the-fly fusing (see Eq. (29)) is used Eq. (50) should result in a lower *N* than Eq. (49) and thus shorter runtimes for the mitigation procedure.

In step S93, the computing system is configured to implement a recursive expansion according to the flowchart of Fig. 8 for the given quasi-stochastic instruction list and to obtain a single current deterministic circuit list of gates implementable by the quantum computer or device. In effect, the flowchart of Fig. 8 converts the quasi-stochastic instruction list into a deterministic circuit list, a corresponding current sign parameter, and a corresponding current sampling cost.

In step S94, the quantum computer or device is configured to run the current deterministic circuit list and to return the corresponding current observable output (*oₘ*, which is the output of a measurement of the target observable (*Ô*) on the mth run (or implementation) of the quasi-stochastic instruction list, i.e. circuit). The corresponding current sign parameter (*sₘ*, see Eq. (15)) and the current sampling cost (*C*_{*S*,*m*}, see Eq. (16)) returned by the flowchart of Fig. 8 are associated with the current observable output (*oₘ*).

In step S95, the computing system is configured to determine a current measurement output (〈*Ô*〉*ₘ*) by multiplying the current observable output (*oₘ*) by the corresponding current sign parameter (*sₘ*) times the corresponding current sampling cost (*C*_{S,*m*}): ${\left〈\hat{O}\right〉}_{m} = {s}_{m} {C}_{S , m} {o}_{m} .$

In step S96, the computing system is configured to repeat the above steps S93-S95, *N* times and to sum the measurement outputs of all *N* runs.

In step S97, the computing system is configured to determine an estimate of the mitigated output to the desired precision, by dividing the summed measurement outputs by the number of repetitions *N*: ${\left〈\hat{O}\right〉}_{M} = \frac{{\sum }_{m = 1}^{N} {\left〈\hat{O}\right〉}_{m}}{N} .$

## Claims

1. A computing system for measuring a mitigated output of a quantum circuit, the computing system (1) comprising a classical computer (5) and a quantum computer or a quantum device (3), **characterised in that** it is configured to implement the following steps:
- recursively mitigating the original circuit gates and any others used for mitigation and twirling using the classical computer (5), thereby building a quasi-stochastic instruction list (23) composed of sequences of gates and channels corresponding to the mitigated circuit, and determining a sampling cost corresponding to the mitigated circuit,
a) given the quasi-stochastic instruction list (23) corresponding to the mitigated circuit and its corresponding sampling cost, determining a number of iterations N required to achieve or exceed a desired precision *σ* required for the mitigated output;
- b) implementing a recursive expansion for the given quasi-stochastic instruction list and obtaining a current deterministic circuit list (25) of gates implementable by the quantum computer or device (3);
- c) running the current deterministic circuit list (25) on the quantum computer or device (3) and returning the corresponding current observable output (*oₘ*) associated with a corresponding current sign parameter (*sₘ*) and a corresponding current sampling cost (*C*_{S,*m*}), and determining a current measurement output by multiplying the current observable output by the corresponding current sign parameter times the current sampling cost;
- d) repeating the above steps b) and c) N times and summing the measurement outputs of all *N* runs;
- e) determining an estimate of the mitigated output (〈*Ô*〉_{M}) by dividing the summed measurement outputs by the number of repetitions *N*.

2. The computing system according to claim 1, **characterised in that** it is configured to build said quasi-stochastic instruction list (23) and to determine the sampling cost corresponding to the mitigated circuit by implementing the following steps:
- building for each given gate (9) in the quantum circuit a corresponding quasi-stochastic elementary instruction list (21) equivalent to the noise-free given gate, and determining its associated elementary sampling cost,
- building the quasi-stochastic instruction list (23) from all the quasi-stochastic elementary instruction lists (21) corresponding to all the gates of the quantum circuit, and
- calculating the sampling cost corresponding to the mitigated circuit by multiplying the elementary sampling costs of all the gates.

3. The computing system according to claim 2, **characterised in that** the building of the quasi-stochastic elementary instruction list (23) corresponding to any given gate in the quantum circuit comprises the implementation of the following steps:
- characterising the given gate's noise model,
- replacing the given gate with a mitigated gate *Ũ*_{M},
- replacing the mitigated gate with a twirled gate *Ũ*_{Tw} and a mitigation channel 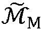 *,*
- expanding each twirled gate in terms of mitigated Pauli operator (P̃*ᵢ*)_{M} and mitigated twirling operator (*W̃*ᵢ)_{M'}
- applying recursive mitigation with the mitigated twirling operators as target gates, and
- terminating the recursion by providing an explicit form for the mitigated Pauli operators.

4. The computing system according to claim 3, **characterised in that** the recursive mitigation implemented by the computing system (1) involves the tailoring of gates, such that the tailoring of a target gate *Ũ*_{T} comprises the following steps:
- implementing a set ${\left\{{{U}^{˜}}_{i}\right\}}_{i = 0}^{{N}_{M}}$ of noisy gate-variants, where *N*_{M} is the number of additional gates required for the mitigation or tailoring, said noisy gate-variants being different implementations of the target gate *Ũ*_{T} to be tailored with different noise models, and characterising each noisy gate-variant *Ũ*ᵢ by determining its corresponding noise channel *εᵢ*, each noise channel *εᵢ* being represented by a corresponding error transfer matrix *T̂_{εᵢ}*, and
- determining a linear combination of the noise channels *εᵢ* that is equivalent to a tailored noise channel *ε*_{T} of interest, the tailored noise channel *ε*_{T} of interest being represented by a corresponding tailored error transfer matrix *T̂*_{*ε*T}, such that the determination of said linear combination is equivalent to solving the following target equations: ${\sum }_{i = 0}^{{N}_{M}} {c}_{i} {\hat{T}}_{{ε}_{i}} = {\hat{T}}_{{ε}_{T}} ,$ where *cᵢ* are the coefficients of the linear combination.

5. The computing system according to claim 4, **characterised in that** it is configured to determine a set of noisy variants and their corresponding linear coefficients *cᵢ* such that the local sampling cost and/or local increase in circuit duration is/are minimised.

6. The computing system according to any one of claims 3 to 5, **characterised in that** it is configured to implement the following steps:
- fusing mitigated gates: mitigated twirling gates and/or mitigated Pauli operators, wherever possible by replacing two neighbouring twirling gates or two mitigated Pauli operators with a single fused twirling gate or a single fused Pauli operator respectively.

7. The computing system according to claim 4, **characterised in that** the tailored noise channel *ε*_{T} of interest is: a Pauli noise channel represented by a tailored error transfer matrix whose off-diagonal elements are all equal to zero; or an identity channel corresponding to a targeted error transfer matrix equal to the identity, giving a noise-free gate.

8. The computing system according to claim 4, **characterised in that** it is configured to only solve the equations relating to the off-diagonal elements of the error transfer matrices *T̂_{εᵢ}* and to choose the set ${\left\{{{U}^{˜}}_{i}\right\}}_{i = 0}^{{N}_{M}}$ of the noisy gate-variants such that the sum of the modulus of the linear coefficients $\left({\sum }_{i = 0}^{{N}_{M}} \left|{c}_{i}\right|\right)$ is equal to unity or that the sum of the modulus of the linear coefficients $\left({\sum }_{i = 0}^{{N}_{M}} \left|{c}_{i}\right|\right)$ is minimal.

9. The computing system according to claim 1, **characterised in that** it is configured to implement mitigation on the fly by generating the quasi-stochastic instruction list as it is needed rather than prior to circuit evaluation.

10. The computing system according to any one of the preceding claims , **characterised in that** the number of repetitions *N* is determined by either: the square of the ratio of the total quantum circuit sampling cost ${C}_{S} = {\prod }_{n = 1}^{{N}_{G}} {C}_{L , S , n}$ to the desired precision *σ*, according to the following formula: $N = {\left(\frac{{\prod }_{n = 1}^{{N}_{G}} {C}_{L , S , n}}{σ}\right)}^{2} ,$ where *C*_{L,S,*n*} is the sampling cost to mitigate the nth gate; or on the fly using: $N = {\left(\frac{{\sum }_{m = 1}^{N} {C}_{S , m}}{σ}\right)}^{\frac{2}{3}} ,$ where *C*_{S,*m*} is the sampling cost for the mth run/implementation of the quasi-stochastic instruction list that corresponds to the mitigated circuit.

11. The computing system according to any one of the preceding claims, **characterised in that** it is configured to implement the recursive expansion for the given quasi-stochastic instruction list by executing the following operations:
- f) initialising an empty circuit list and empty Pauli and index stacks, initialising a sign parameter to '+1', and initialising a sampling cost to '1';
- g) viewing the top instruction of the quasi-stochastic instruction list such that:
- h) if said top instruction is a noisy gate, then fusing all the Pauli Words, if any, on the Pauli stack applying recursive expansion to the mitigated version of the resulting fused Pauli operator and appending the resulting circuit list to the current circuit list and then resetting the Pauli stack to an empty list and appending the noisy gate to the current circuit list,
- i) if said top instruction is a mitigation channel $\left({{M}^{˜}}_{M}={\left\{{c}_{M , i}:{{P}^{˜}}_{i , M}\right\}}_{i = 0}^{{2}^{{N}_{Q}} - 1}\right)$, then randomly choosing one of the instruction lists related to the mitigation channel according to the channel probability distribution (*q*_{L,*i*}), multiplying the current sign parameter by the corresponding sign factor (*s*_{L,*i*}), and multiplying the current sampling cost by the corresponding sampling cost factor (*C*_{L,S}), applying recursive expansion with this new instruction list, and appending the resulting circuit list to the current circuit list,
- j) if said top instruction is an opening twirling channel, then randomly choosing one of the instruction lists related to the opening twirling channel according to the channel probability distribution (*q*_{L,*i*}), applying recursive expansion with this new instruction list, appending the circuit list obtained to the current circuit list, and multiplying the current sign parameter and current sampling cost by the sign parameter (*s*_{L,*i*}) and sampling cost (*C*_{L,S}) found for the new instruction list, and adding the index of the instruction list used to the index stack,
- k) if said top instruction is a closing twirling channel, then viewing and removing the most recent index from the stack, extracting the instruction list from the twirling channel, relating to the closing twirling channel, with the corresponding index, applying recursive expansion with this new instruction list, appending the resulting circuit list to the current circuit list, and multiplying the current sign parameter and current sampling cost by the sign parameter and sampling cost found for the new instruction list,
- l) if said top instruction is a mitigated Pauli operator, then if fusion is required: adding the operator to the Pauli stack unless the mitigated Pauli operator is the final operator in the global instruction list, in which case step h) is applied but without an explicit noisy gate; if fusion is not required: applying recursive expansion with this new instruction list for the mitigated Pauli operator, appending the resulting circuit list to the current circuit list, and multiplying the current sign parameter and current sampling cost by the sign parameter and sampling cost found for the new instruction list, and
- m) discard the top instruction from the the quasi-stochastic instruction list and if the quasi-stochastic instruction list is not empty, then repeating steps g) to m), else returning the current circuit list, current sign parameter (*sₘ*), and current sampling cost (*C*_{S,*m*}).

12. The computing system according to any one of the preceding claims, **characterised in that** it comprises a classical-quantum interface (7) configured to couple the classical computer (5) to the quantum computer or device (3).

13. A computing method for measuring a mitigated output of a quantum circuit, **characterised in that** it comprises the following steps:
- recursively mitigating the original circuit gates and any others used for mitigation and twirling, thereby building a quasi-stochastic instruction list composed of sequences of gates and channels corresponding to the mitigated circuit, and determining a sampling cost corresponding to the mitigated circuit,
a) given the quasi-stochastic instruction list (23) corresponding to the mitigated circuit and its corresponding sampling cost, determining a number of iterations N required to achieve or exceed a desired precision *σ* required for the mitigated output;
- b) implementing a recursive expansion for the given quasi-stochastic instruction list and obtaining a current deterministic circuit list (25) of gates implementable by a quantum computer or a quantum device (3);
- c) running the current deterministic circuit list (25) on the quantum computer or device (3) and returning the corresponding current observable output (*oₘ*) associated with a corresponding current sign parameter (*sₘ*) and a corresponding current sampling cost (*C*_{S,*m*}), and determining a current measurement output by multiplying the current observable output by the corresponding current sign parameter times the current sampling cost;
- d) repeating the above steps b) and c) *N* times and summing the measurement outputs of all *N* runs;
- e) determining an estimate of the mitigated output (〈*Ô*〉_{M}) by dividing the summed measurement outputs by the number of repetitions *N .*

## Patentansprüche

1. Rechensystem zum Messen eines abgeschwächten Ausgangs einer Quantenschaltung, wobei das Rechensystem (1) einen klassischen Computer (5) und einen Quantencomputer oder eine Quantenvorrichtung (3) umfasst, **dadurch gekennzeichnet,**
**dass** es so konfiguriert ist, dass es die folgenden Schritte implementiert:
- rekursives Mitigieren der ursprünglichen Schaltungsgatter und aller anderen, die für die Mitigation und das Twirling verwendet werden, mithilfe des klassischen Computers (5), wodurch eine quasi-stochastische Anweisungsliste (23) erstellt wird, die aus Sequenzen von Gattern und Kanälen besteht, die der mitigierten Schaltung entsprechen, und Bestimmen von Probenahmekosten, die der mitigierten Schaltung entsprechen,
a) unter Berücksichtigung der quasi-stochastischen Anweisungsliste (23), die der abgeschwächten Schaltung entspricht, und den entsprechenden Probenahmekosten, Bestimmen einer Anzahl von Iterationen N, die erforderlich sind, um eine gewünschte Präzision σ zu erreichen oder zu überschreiten, die für den abgeschwächten Ausgang erforderlich ist;
- b) Implementieren einer rekursiven Erweiterung für die gegebene quasi-stochastische Anweisungsliste und Erhalten einer aktuellen deterministischen Schaltungsliste (25) von Gattern, die von dem Quantencomputer oder der Quantenvorrichtung (3) implementiert werden können;
- c) Ausführen der aktuellen deterministischen Schaltungsliste (25) auf dem Quantencomputer oder der Quantenvorrichtung (3) und Zurückgeben des entsprechenden aktuellen beobachtbaren Ausgangs (*oₘ*)*,* der einem entsprechenden aktuellen Vorzeichenparameter (*sₘ*) und entsprechenden aktuellen Probennahmekosten (*C*_{S,*m*}) zugeordnet ist, und Bestimmen σ des aktuellen Messausgangs durch Multiplikation des beobachtbaren aktuellen Ausgangs mit dem entsprechenden aktuellen Vorzeichenparameter mal den aktuellen Probennahmekosten;
- d) Wiederholen der obigen Schritte b) und c) *N* Mal und Summieren der Messergebnisse aller *N* Durchläufe;
- e) Bestimmen einer Schätzung des abgeschwächten Ausgangs (〈*Ô*〉_{M}), indem die summierten Messausgänge durch die Anzahl der Wiederholungen *N* geteilt werden.

2. Rechensystem nach Anspruch 1, **dadurch gekennzeichnet, dass** es so konfiguriert ist, dass es die quasi-stochastische Anweisungsliste (23) erstellt und die der abgeschwächten Schaltung entsprechenden Probenahmekosten durch das Implementieren der folgenden Schritte bestimmt:
- Erstellen einer entsprechenden quasi-stochastischen elementaren Anweisungsliste (21), die dem rauschfreien gegebenen Gatter entspricht, für jedes gegebene Gatter (9) in der Quantenschaltung und Bestimmen von damit verbundenen elementaren Probenahmekosten,
- Erstellen der quasi-stochastischen Anweisungsliste (23) aus allen quasi-stochastischen elementaren Anweisungslisten (21), die allen Gattern der Quantenschaltung entsprechen, und
- Berechnen der der mitigierten Schaltung entsprechenden Probenahmekosten durch Multiplikation der elementaren Probenahmekosten aller Gatter.

3. Rechensystem nach Anspruch 2, **dadurch gekennzeichnet, dass** das Erstellen der quasi-stochastischen elementaren Anweisungsliste (23), die einem beliebigen gegebenen Gatter in der Quantenschaltung entspricht, die Implementation der folgenden Schritte umfasst:
- Charakterisieren des Rauschmodells des jeweiligen Gatters,
- Ersetzen des gegebenen Gatters durch ein abgeschwächtes Gatter *Ũ*_{M},
- Ersetzen des mitigierten Gatters durch ein verdrehtes Gatter *Ũ*_{Tw} und einen Mitigationskanall*M̃*_{M},
- Erweitern jedes verdrehten Gatters im Hinblick auf den mitigierten Pauli-Operator (*P̃ᵢ*)_{M} und den mitigierten Twirling-Operator(*W̃* )_{M},
- Anwenden einer rekursiven Mitigation mit den abgeschwächten Twirling-Operatoren als Zielgatter, und
- Beenden der Rekursion durch Bereitstellen einer expliziten Form für die mitigierten Pauli-Operatoren.

4. Rechensystem nach Anspruch 3, **dadurch gekennzeichnet, dass** die von dem Rechensystem (1) implementierte rekursive Mitigation das Anpassen von Gattern umfasst, so dass das Anpassen eines Zielgatters die folgenden Schritte *Ũ*_{T} umfasst:
- Implementieren einer Reihe ${\left\{{{U}^{˜}}_{i}\right\}}_{i = 0}^{{N}_{M}}$ von verrauschten Gatter-Varianten, wobei *N*_{M} die Anzahl zusätzlicher Gatter ist, die für die Mitigation oder Anpassung erforderlich sind, wobei die verrauschten Gatter-Varianten unterschiedliche Implementierungen des Ziel-Gatters *Ũ*_{T} sind, die mit verschiedenen Rauschmodellen angepasst werden sollen, und Charakterisieren jeder verrauschten Gatter-Variante *Ũ*ᵢ durch Bestimmen ihres entsprechenden Rauschkanals ε*ᵢ*, wobei jeder Rauschkanal ε*ᵢ* durch eine entsprechende Fehlerübertragungsmatrix *T̂_{εᵢ}* dargestellt wird, und
- Bestimmen einer linearen Kombination der Rauschkanäle ε*ᵢ*, die einem angepassten Rauschkanal ε_{T} entspricht, wobei der angepasste Rauschkanal ε_{T} von Interesse durch eine entsprechende angepasste Fehlerübertragungsmatrix dargestellt wird, *T̂*_{*ε*_{T}} so dass die Bestimmung der linearen Kombination der Lösung der folgenden Zielgleichungen entspricht: ${\sum }_{i = 0}^{{N}_{M}} {c}_{i} {\hat{T}}_{{ε}_{i}} = {\hat{T}}_{{ε}_{⊤}} ,$ wobei *cᵢ* die Koeffizienten der linearen Kombination sind.

5. Rechensystem nach Anspruch 4, **dadurch gekennzeichnet, dass** es so konfiguriert ist, dass es eine Reihe von verrauschten Varianten und deren entsprechende lineare Koeffizienten *cᵢ* so bestimmt, dass die lokalen Probenahmekosten und/oder die lokale Erhöhung der Schaltungsdauer minimiert werden.

6. Rechensystem nach einem der Ansprüche 3 bis 5, **dadurch gekennzeichnet, dass** es so konfiguriert ist, dass es die folgenden Schritte implementiert:
- Zusammenführen von mitigierten Gattern: mitigierte Twirling-Gatter und/oder mitigierte Pauli-Operatoren, soweit möglich, durch Ersetzen zweier benachbarter Twirling-Gatter oder zweier mitigierter Pauli-Operatoren durch ein einzelnes zusammengeführtes Twirling-Gatter bzw. einen einzelnen zusammengeführten Pauli-Operator.

7. Rechensystem nach Anspruch 4, **dadurch gekennzeichnet, dass** der angepasste Rauschkanal ε_{T} von Interesse Folgendes ist: ein Pauli-Rauschkanal, der durch eine angepasste Fehlerübertragungsmatrix dargestellt wird, deren ausserdiagonale Elemente alle gleich Null sind; oder ein Identitätskanal, der einer zielgerichteten Fehlerübertragungsmatrix entspricht, die der Identität entspricht, wodurch ein rauschfreies Gatter entsteht.

8. Rechensystem nach Anspruch 4, **dadurch gekennzeichnet, dass** es so konfiguriert ist, dass es nur die Gleichungen, die sich auf die nicht diagonalen Elemente der Fehlerübertragungsmatrizen *T̂*_{*ε*ᵢ} beziehen, löst und die Reihe ${\left\{{{U}^{˜}}_{i}\right\}}_{i = 0}^{{N}_{M}}$ der verrauschten Gatter-Varianten so wählt, dass die Summe des Moduls der linearen Koeffizienten $\left({\sum }_{i = 0}^{{N}_{M}} \left|{C}_{i}\right|\right)$ gleich eins ist oder dass die Summe des Moduls der linearen Koeffizienten $\left({\sum }_{i = 0}^{{N}_{M}} \left|{C}_{i}\right|\right)$ minimal ist.

9. Rechensystem nach Anspruch 1, **dadurch gekennzeichnet, dass** es so konfiguriert ist, dass es die Mitigation im laufenden Betrieb durch Erzeugen der quasi-stochastischen Anweisungsliste nach Bedarf statt vor der Schaltungsauswertung implementiert.

10. Rechensystem nach einem der vorhergehenden Ansprüche, **dadurch gekennzeichnet, dass** die Anzahl der Wiederholungen *N* entweder durch eines von Folgendem bestimmt wird: das Quadrat des Verhältnisses der gesamten Probenahmekosten ${C}_{S} = {\prod }_{n = 1}^{{N}_{G}} {C}_{L , S , n}$ für die Quantenschaltung zur gewünschten Präzision σ gemäß der folgenden Formel: $N = {\left(\frac{{\prod }_{n = 1}^{{N}_{G}} {C}_{L , S , n}}{σ}\right)}^{2} ,$
wobei *C*_{L,S,*n*} die Probenahmekosten zum Mitigieren des *n-ten* Gatters ist; oder im laufenden Betrieb mit: $N = {\left(\frac{{\sum }_{m = 1}^{N} {C}_{s , m}}{σ}\right)}^{\frac{2}{3}} ,$
wobei *C_{S,m}* die Probenahmekosten für den *m*-ten Durchlauf/die *m*-te Implementierung der quasi-stochastischen Anweisungsliste ist, die der mitigierten Schaltung entspricht.

11. Rechensystem nach einem der vorhergehenden Ansprüche, **dadurch gekennzeichnet, dass** es so konfiguriert ist, dass es die rekursive Erweiterung für die gegebene quasi-stochastische Anweisungsliste durch Ausführen folgender Operationen implementiert:
- f) Initialisieren einer leeren Schaltungsliste und leerer Pauli- und Index-Stapel, Initialisieren eines Vorzeichenparameters auf "+1" und Initialisieren von Probenahmekosten auf "1";
- g) Anzeigen der obersten Anweisung der quasi-stochastischen Anweisungsliste, so dass:
- h) wenn es sich bei der obersten Anweisung um ein verrauschtes Gatter handelt, dann das Zusammenführen aller Pauli-Wörter, falls vorhanden, auf dem Pauli-Stapel durch Anwendung einer rekursiven Erweiterung auf die mitigierte Version des resultierenden zusammengeführten Pauli-Operators und Anhängen der resultierenden Schaltungsliste an die aktuelle Schaltungsliste und dann das Zurücksetzen des Pauli-Stapels auf eine leere Liste und Anhängen des verrauschten Gatters an die aktuelle Schaltungsliste,
- i) wenn die oberste Anweisung ein Mitigationskanal $\left({{M}_{M}}^{˜}={\left\{{c}_{M , i}:{{P}_{i , M}}^{˜}\right\}}_{i = 0}^{{2}^{{N}_{Q}} - 1}\right)$ ist, dann zufälliges Auswählen einer der Anweisungslisten, die sich auf den Mitigationskanal beziehen, gemäß der Kanal-Wahrscheinlichkeitsverteilung (*q*_{L,*i*}), Multiplizieren des aktuellen Vorzeichenparameters mit dem entsprechenden Vorzeichenfaktor (*s*_{L,*i*}) und Multiplizieren von aktuellen Probenahmekosten mit dem entsprechenden Probennahmekostenfaktor (*C*_{L,S}), Anwenden einer rekursiven Erweiterung mit dieser neuen Anweisungsliste und Anhängen der resultierenden Schaltungsliste an die aktuelle Schaltungsliste,
- j) wenn es sich bei der obersten Anweisung um einen öffnenden Twirling-Kanal handelt, dann zufälliges Auswählen einer der Anweisungslisten, die sich auf den öffnenden Twirling-Kanal beziehen, gemäß der Kanal-Wahrscheinlichkeitsverteilung (*q*_{L,*i*}), Anwenden einer rekursiven Erweiterung mit dieser neuen Anweisungsliste, Anhängen der erhaltenen Schaltungsliste an die aktuelle Schaltungsliste und Multiplizieren des aktuellen Vorzeichenparameters und der aktuellen Probenahmekosten mit dem Vorzeichenparameter (*s*_{L,*i*}) und den Probenahmekosten (*C*_{L,S}), die für die neue Anweisungsliste ermittelt wurden, und Hinzufügen des Index der verwendeten Anweisungsliste zu dem Index-Stapel,
- k) wenn es sich bei der obersten Anweisung um einen schließenden Twirling-Kanal handelt, dann Anzeigen und Entfernen des letzten Index aus dem Stapel, Extrahieren der Anweisungsliste aus dem Twirling-Kanal, die sich auf den schließenden Twirling-Kanal bezieht, mit dem entsprechenden Index, Anwenden einer rekursiven Erweiterung mit dieser neuen Anweisungsliste, Anhängen der resultierenden Schaltungsliste an die aktuelle Schaltungsliste und Multiplizieren des aktuellen Vorzeichenparameters und der aktuellen Probenahmekosten mit dem Vorzeichenparameter und den Probenahmekosten, die für die neue Anweisungsliste ermittelt wurden,
- I) wenn es sich bei der obersten Anweisung um einen mitigierten Pauli-Operator handelt, dann, wenn eine Zusammenführung erforderlich ist: Hinzufügen des Operators zu dem Pauli-Stapel, es sei denn, der mitigierte Pauli-Operator ist der letzte Operator in der globalen Anweisungsliste, in diesem Fall wird Schritt h) angewendet, aber ohne explizites verrauschtes Gatter; wenn keine Zusammenführung erforderlich ist: Anwenden einer rekursiven Erweiterung mit dieser neuen Anweisungsliste für den mitigierten Pauli-Operator, Anhängen der resultierenden Schaltungsliste an die aktuelle Schaltungsliste und Multiplizieren des aktuellen Vorzeichenparameters und der aktuellen Probenahmekosten mit dem Vorzeichenparameter und den Probenaamekosten, die für die neue Anweisungsliste ermittelt wurden, und
- m) Verwerfen der obersten Anweisung aus der quasi-stochastischen Anweisungsliste und dann, wenn die quasi-stochastische Anweisungsliste nicht leer ist, Wiederholen der Schritte g) bis m), ansonsten Zurückgeben der aktuellen Schaltungsliste, der aktuellen Zeichenparameter (*sₘ*) und der aktuellen Probenahmekosten (*C_{s,m}*).

12. Rechensystem nach einem der vorhergehenden Ansprüche, **dadurch gekennzeichnet, dass** es eine klassische Quantenschnittstelle (7) umfasst, die so konfiguriert ist, dass sie den klassischen Computer (5) mit dem Quantencomputer oder der Quantenvorrichtung (3) koppelt.

13. Rechenverfahren zum Messen eines abgeschwächten Ausgangs einer Quantenschaltung, **dadurch gekennzeichnet, dass** es die folgenden Schritte umfasst:
- rekursives Mitigieren der ursprünglichen Schaltungsgatter und aller anderen, die für die Mitigation und das Twirling verwendet werden, wodurch eine quasi-stochastische Anweisungsliste erstellt wird, die aus Sequenzen von Gattern und Kanälen besteht, die der mitigierten Schaltung entsprechen, und Bestimmen von Probenahmekosten, die der mitigierten Schaltung entsprechen,
a) unter Berücksichtigung der quasi-stochastischen Anweisungsliste (23), die der abgeschwächten Schaltung entspricht, und den entsprechenden Probenahmekosten, Bestimmen einer Anzahl von Iterationen *N*, die erforderlich sind, um eine gewünschte Präzision σ zu erreichen oder zu überschreiten, σdie für den abgeschwächten Ausgang erforderlich ist;
- b) Implementieren einer rekursiven Erweiterung für die gegebene quasi-stochastische Anweisungsliste und Erhalten einer aktuellen deterministischen Schaltungsliste (25) von Gattern, die von einem Quantencomputer oder einer Quantenvorrichtung (3) implementiert werden können;
- c) Ausführen der aktuellen deterministischen Schaltungsliste (25) auf dem Quantencomputer oder der Quantenvorrichtung (3) und Zurückgeben des entsprechenden aktuellen beobachtbaren Ausgangs (*oₘ*), der einem entsprechenden aktuellen Vorzeichenparameter (*sₘ*) und entsprechenden aktuellen Probennahmekosten (*C_{S,m}*) zugeordnet ist, und Bestimmen eines aktuellen Messausgangs durch Multiplikation des beobachtbaren aktuellen Ausgangs mit dem entsprechenden aktuellen Vorzeichenparameter mal den aktuellen Probennahmekosten;
- d) Wiederholen der obigen Schritte b) und c) *N* Mal und Summieren der Messergebnisse aller *N* Durchläufe;
- e) Bestimmen einer Schätzung des abgeschwächten Ausgangs ((〈*Ô*〉_{M})), indem die summierten Messausgänge durch die Anzahl der Wiederholungen N geteilt werden.

## Revendications

1. Système informatique de mesure d'une sortie atténuée d'un circuit quantique, le système informatique (1) comportant un ordinateur classique (5) et un ordinateur quantique ou un dispositif quantique (3), **caractérisé**
**en ce qu'**il est configuré pour mettre en œuvre les étapes suivantes :
- l'atténuation récursive des portes de circuit d'origine et de toute autre porte utilisée pour l'atténuation et le twirling à l'aide de l'ordinateur classique (5), constituant ainsi une liste d'instructions quasi-stochastiques (23) composée de séquences de portes et de canaux correspondant au circuit atténué, et la détermination d'un coût d'échantillonnage correspondant au circuit atténué,
a) compte tenu de la liste d'instructions quasi-stochastiques (23) correspondant au circuit atténué et de son coût d'échantillonnage correspondant, la détermination d'un nombre d'itérations N nécessaires pour atteindre ou dépasser une précision σ souhaitée requise pour la sortie atténuée ;
- b) la mise en œuvre d'une expansion récursive pour la liste d'instructions quasi-stochastiques donnée et l'obtention d'une liste de circuits déterministes actuelle (25) de portes pouvant être mises en œuvre par l'ordinateur ou le dispositif quantique (3) ;
- c) l'exécution de la liste de circuits déterministes actuelle (25) sur l'ordinateur ou le dispositif quantique (3) et la restitution de la sortie observable actuelle (*oₘ*) correspondante associée à un paramètre de signe actuel (sm) correspondant et un coût d'échantillonnage actuel (*C_{S,m}*) correspondant, et la détermination d'une sortie de mesure actuelle en multipliant la sortie observable actuelle par le paramètre de signe actuel correspondant multiplié par le coût d'échantillonnage actuel ;
- d) la répétition des étapes b) et c) ci-dessus N fois et l'addition des sorties de mesure de tous les *N* cycles ;
- e) la détermination d'une estimation de la sortie atténuée (〈*Ô*〉_{M}) en divisant les sorties de mesure additionnées par le nombre de répétitions N.

2. Système informatique selon la revendication 1, **caractérisé en ce qu'**il est configuré pour constituer ladite liste d'instructions quasi-stochastiques (23) et pour déterminer le coût d'échantillonnage correspondant au circuit atténué en mettant en œuvre les étapes suivantes :
- la constitution, pour chaque porte donnée (9) dans le circuit quantique, d'une liste d'instructions élémentaires quasi-stochastiques (21) correspondante équivalente à la porte donnée sans bruit, et la détermination de son coût d'échantillonnage élémentaire associé,
- la constitution de la liste d'instructions quasi-stochastiques (23) à partir de toutes les listes d'instructions élémentaires quasi-stochastiques (21) correspondant à toutes les portes du circuit quantique, et
- le calcul du coût d'échantillonnage correspondant au circuit atténué en multipliant les coûts d'échantillonnage élémentaires de toutes les portes.

3. Système informatique selon la revendication 2, **caractérisé en ce que** la constitution de la liste d'instructions élémentaires quasi-stochastiques (23) correspondant à une porte donnée dans le circuit quantique comporte la mise en œuvre des étapes suivantes :
- la caractérisation du modèle de bruit de la porte donnée,
- le remplacement de la porte donnée par une porte atténuée *Ũ*_{M},
- le remplacement de la porte atténuée par une porte de twirling *Ũ*_{Tw} et un canal d'atténuation*M̃*_{M},
- l'expansion de chaque porte de twirling en termes d'opérateur de Pauli atténué (*P̃ᵢ*)_{M} et d'opérateur de twirling atténué (*W̃*)_{M'}
- l'application d'une atténuation récursive avec les opérateurs de twirling atténués comme portes cibles, et
- la fin de la récursion en fournissant une forme explicite pour les opérateurs de Pauli atténués.

4. Système informatique selon la revendication 3, **caractérisé en ce que** l'atténuation récursive mise en œuvre par le système informatique (1) implique l'adaptation de portes, de sorte que l'adaptation d'une porte cible *Ũ*_{T} comporte les étapes suivantes :
- la mise en œuvre d'un ensemble ${\left\{{{U}^{˜}}_{i}\right\}}_{i = 0}^{{N}_{M}}$ de variantes de porte bruyantes, où *N*_{M} est le nombre de portes supplémentaires nécessaires à l'atténuation ou à l'adaptation, lesdites variantes de porte bruyantes étant différentes mises en œuvre de la porte cible *Ũ*_{T} à adapter avec différents modèles de bruit, et la caractérisation de chaque variante de porte bruyante *Ũ*ᵢ en déterminant son canal de bruit correspondant *εᵢ,* chaque canal de bruit *εᵢ* étant représenté par une matrice de transfert d'erreur correspondante *T̂_{εᵢ}*, et
- la détermination d'une combinaison linéaire des canaux de bruit ε*ᵢ* qui est équivalente à un canal de bruit adapté ε_{T} d'intérêt, le canal de bruit adapté ε_{T} d'intérêt étant représenté par une matrice de transfert d'erreur personnalisée correspondante *T̃*_{*ε*_{T}}*,* de sorte que la détermination de ladite combinaison linéaire soit équivalente à la résolution des équations cibles suivantes : ${\sum }_{i = 0}^{{N}_{M}} {c}_{i} {\hat{T}}_{{ε}_{i}} = {\hat{T}}_{{ε}_{⊤}} ,$ où *cᵢ* sont les coefficients de la combinaison linéaire.

5. Système informatique selon la revendication 4, **caractérisé en ce qu'**il est configuré pour déterminer un ensemble de variantes bruyantes et leurs coefficients linéaires correspondants *cᵢ* de sorte que le coût d'échantillonnage local et/ou l'augmentation locale de la durée de circuit soient minimisés.

6. Système informatique selon l'une quelconque des revendications 3 à 5, **caractérisé en ce qu'**il est configuré pour mettre en œuvre les étapes suivantes :
- la fusion de portes atténuées : des portes de twirling atténuées et/ou des opérateurs de Pauli atténués, dans la mesure du possible en remplaçant respectivement deux portes de twirling voisines ou deux opérateurs de Pauli atténués par une seule porte de twirling fusionnée ou un seul opérateur de Pauli fusionné.

7. Système informatique selon la revendication 4, **caractérisé en ce que** le canal de bruit adapté ε_{T} d'intérêt est : un canal de bruit de Pauli représenté par une matrice de transfert d'erreur adaptée dont les éléments hors diagonale sont tous égaux à zéro ; ou un canal d'identité correspondant à une matrice de transfert d'erreur ciblée égale à l'identité, donnant une porte sans bruit.

8. Système informatique selon la revendication 4, **caractérisé en ce qu'**il est configuré pour résoudre uniquement les équations relatives aux éléments hors diagonale des matrices de transfert d'erreur *T̃_{εᵢ}* et pour choisir l'ensemble ${\left\{{{U}^{˜}}_{i}\right\}}_{i = 0}^{{N}_{M}}$ des variantes de porte bruyantes de sorte que la somme du module des coefficients linéaires ( ${\sum }_{i = 0}^{{N}_{M}} \left|{C}_{i}\right|$) soit égale à l'unité ou que la somme du module des coefficients linéaires ( ${\sum }_{i = 0}^{{N}_{M}} \left|{C}_{i}\right|$*)* soit minimale.

9. Système informatique selon la revendication 1, **caractérisé en ce qu'**il est configuré pour mettre en œuvre une atténuation à la volée en générant la liste d'instructions quasi-stochastiques selon les besoins plutôt qu'avant une évaluation de circuit.

10. Système informatique selon l'une quelconque des revendications précédentes, **caractérisé en ce que** le nombre de répétitions N est déterminé soit par : le carré du rapport du coût total d'échantillonnage de circuit quantique ${C}_{S} = {\prod }_{n = 1}^{{N}_{G}} {C}_{L , S , n}$ à la précision souhaitée σ, selon la formule suivante : $N = {\left(\frac{{\prod }_{n = 1}^{{N}_{G}} {C}_{L , S , n}}{σ}\right)}^{2} ,$
où *C*_{L,S,*n*} est le coût d'échantillonnage pour atténuer la nième porte ; ou à la volée en utilisant : $N = {\left(\frac{{\sum }_{m = 1}^{N} {C}_{s , m}}{σ}\right)}^{\frac{2}{3}} ,$
où *C_{S,m}* est le coût d'échantillonnage pour la mième exécution/mise en œuvre de la liste d'instructions quasi-stochastiques qui correspond au circuit atténué.

11. Système informatique selon l'une quelconque des revendications précédentes, **caractérisé en ce qu'**il est configuré pour mettre en œuvre l'expansion récursive pour la liste d'instructions quasi-stochastiques donnée en exécutant les opérations suivantes :
- f) initialiser une liste de circuits vides et de piles de Pauli et d'index vides, initialiser un paramètre de signe à « +1 » et initialiser un coût d'échantillonnage à « 1 » ;
- g) visualiser l'instruction du haut de la liste d'instructions quasi-stochastiques de manière à :
- h) si ladite instruction du haut est une porte bruyante, alors fusionner tous les mots de Pauli, le cas échéant, sur la pile de Pauli en appliquant une expansion récursive à la version atténuée de l'opérateur de Pauli fusionné résultant et en ajoutant la liste de circuits résultante à la liste de circuits actuelle, puis réinitialiser la pile de Pauli à une liste vide et ajouter la porte bruyante à la liste de circuits actuelle,
- i) si ladite instruction du haut est un canal d'atténuation ( ${{M}_{M}}^{˜} = {\left\{{c}_{M , i}:{{P}_{i , M}}^{˜}\right\}}_{i = 0}^{{2}^{{N}_{Q}} - 1}$), alors choisir aléatoirement l'une des listes d'instructions liées au canal d'atténuation selon la distribution de probabilité de canal (*q*_{L,i}), multiplier le paramètre de signe actuel par le facteur de signe (*S*L,*i*) correspondant, et multiplier le coût d'échantillonnage actuel par le facteur de coût d'échantillonnage (*C*_{L,S}) correspondant, appliquer une expansion récursive avec cette nouvelle liste d'instructions, et ajouter la liste de circuits résultante à la liste de circuits actuelle,
- j) si ladite instruction du haut est un canal de twirling d'ouverture, alors choisir aléatoirement l'une des listes d'instructions liées au canal de twirling d'ouverture selon la distribution de probabilité de canal (q_{L,*i*}), appliquer une expansion récursive avec cette nouvelle liste d'instructions, ajouter la liste de circuits obtenue à la liste de circuits actuelle, et multiplier le paramètre de signe actuel et le coût d'échantillonnage actuel par le paramètre de signe (s_{L,i}) et le coût d'échantillonnage (*C*_{L,S}) obtenu pour la nouvelle liste d'instructions, et ajouter l'index de la liste d'instructions utilisée à la pile d'index,
- k) si ladite instruction du haut est un canal de twirling de fermeture, alors visualiser et supprimer l'index le plus récent de la pile, extraire la liste d'instructions du canal de twirling, relative au canal de twirling de fermeture, avec l'index correspondant, appliquer une expansion récursive avec cette nouvelle liste d'instructions, ajouter la liste de circuits résultante à la liste de circuits actuelle, et multiplier le paramètre de signe actuel et le coût d'échantillonnage actuel par le paramètre de signe et le coût d'échantillonnage obtenus pour la nouvelle liste d'instructions,
- I) si ladite instruction du haut est un opérateur de Pauli atténué, alors si une fusion est requise : ajouter l'opérateur à la pile de Pauli sauf si l'opérateur de Pauli atténué est l'opérateur final dans la liste d'instruction globale, auquel cas l'étape h) est appliquée mais sans porte bruyante explicite ; si une fusion n'est pas requise : appliquer une expansion récursive avec cette nouvelle liste d'instructions pour l'opérateur de Pauli atténué, ajouter la liste de circuits résultante à la liste de circuits actuelle, et multiplier le paramètre de signe actuel et le coût d'échantillonnage actuel par le paramètre de signe et le coût d'échantillonnage obtenus pour la nouvelle liste d'instructions, et
- m) rejeter l'instruction du haut de la liste d'instructions quasi-stochastiques et si la liste d'instructions quasi-stochastiques n'est pas vide, alors répéter les étapes g) à m), sinon retourner la liste de circuits actuelle, au paramètre de signe actuel (*sₘ*) et au coût d'échantillonnage actuel *(Cs,m).*

12. Système informatique selon l'une quelconque des revendications précédentes, **caractérisé en ce qu'**il comporte une interface classique-quantique (7) configurée pour coupler l'ordinateur classique (5) à l'ordinateur ou au dispositif quantique (3).

13. Procédé de calcul pour mesurer une sortie atténuée d'un circuit quantique, **caractérisé en ce qu'**il comporte les étapes suivantes :
- l'atténuation récursive des portes de circuit d'origine et de toute autre porte utilisée pour l'atténuation et le twirling, constituant ainsi une liste d'instructions quasi-stochastiques composée de séquences de portes et de canaux correspondant au circuit atténué, et la détermination d'un coût d'échantillonnage correspondant au circuit atténué,
a) compte tenu de la liste d'instructions quasi-stochastiques (23) correspondant au circuit atténué et de son coût d'échantillonnage correspondant, la détermination d'un nombre d'itérations N nécessaires pour atteindre ou dépasser une précision σ souhaitée requise pour la sortie atténuée ;
- b) la mise en œuvre d'une expansion récursive pour la liste d'instructions quasi-stochastiques donnée et l'obtention d'une liste de circuits déterministes actuelle (25) de portes pouvant être mis en œuvre par un ordinateur quantique ou un dispositif quantique (3) ;
- c) l'exécution de la liste de circuits déterministes actuelle (25) sur l'ordinateur ou le dispositif quantique (3) et la restitution de la sortie observable actuelle correspondante (*oₘ*) associée à un paramètre de signe actuel correspondant (*sₘ*) et un coût d'échantillonnage actuel correspondant (*C_{S,m}*), et la détermination d'une sortie de mesure actuelle en multipliant la sortie observable actuelle par le paramètre de signe actuel correspondant multiplié par le coût d'échantillonnage actuel ;
- d) la répétition des étapes b) et c) ci-dessus N fois et l'addition des sorties de mesure de tous les N cycles ;
- e) la détermination d'une estimation de la sortie atténuée (〈*Ô*〉_{M}) en divisant les sorties de mesure additionnées par le nombre de répétitions N.
